# EUROPEAN PATENT APPLICATION

(11) **EP 4 059 984 A1**
(43) Date of publication of application: **21.09.2022**
(21) Application number: 20887041.0
(22) Date of filing: 13.11.2020
(51) Int. Cl.: C08G 65/329, C07B 61/00

(54) **METHOD FOR PRODUCING FLUOROPOLYETHER GROUP-CONTAINING COMPOUND**

(30) Priority: 13.11.2019 JP 2019205503
(71) Applicant: Daikin Industries, Ltd., Osaka-shi, Osaka 530-8323 (JP)
(72) Inventor: TAKANO, Shinya, Osaka-shi, Osaka 530-8323 (JP); NOMURA, Takashi, Osaka-shi, Osaka 530-8323 (JP); KONNO, Tsutomu, Kyoto-shi, Kyoto 606-8585 (JP); YAMADA, Shigeyuki, Kyoto-shi, Kyoto 606-8585 (JP)
(74) Representative: Hoffmann Eitle
(86) International application number: PCT/JP2020/042519
(87) International publication number: WO 2021/095878

(57) **Abstract**

A method for producing a fluoropolyether group-containing compound, comprising reacting a fluoropolyether group-containing compound (A) represented by the formula (1) with a compound (C) represented by any of the formulae (c1) to (c4) in the presence of a metal catalyst comprising at least one selected from Pd, Cu, Ni, Pt, and Ag. The symboles are defined in the description.

X¹¹-(R¹¹)ₙ₁₁-R^{F1}-X¹² (1)

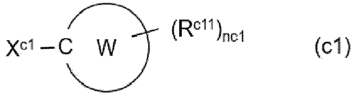

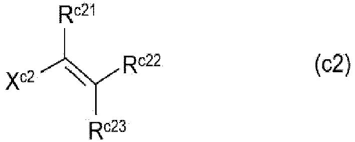

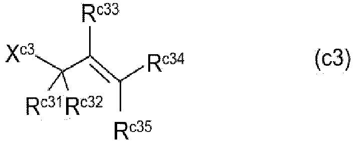

X^{c4}-R^{c41}-C≡C-R^{c42} (c4)

## Description

### Technical Field

The present disclosure relates to a method for producing a fluoropolyether group-containing compound.

### Background Art

It is known that compounds having a fluoropolyether group can, when used for surface treatment of base materials, for example, form a treating layer (hereinafter, sometimes referred to as a "surface-treating layer") having physical properties such as water-repellency and oil-repellency (for example, Patent Literature 1).

Compounds having a fluoropolyether group as described above have been used in many applications, and various structures have been investigated.

### Citation List

### Patent Literature

Patent Literature 1: JP 2014-218639 A

### Summary of Invention

### Technical Problem

An object of the present disclosure is to provide a new method for producing a fluoropolyether group-containing compound.

### Solution to Problem

The present disclosure provides [1] to [11] below.
[1]
   A method for producing a fluoropolyether group-containing compound, comprising reacting a fluoropolyether group-containing compound (A) represented by the following formula:

   X¹¹-(R¹¹)ₙ₁₁-R^{F1}X¹² (1)

   with a compound (C) represented by any of the following formulae (c1) to (c4): 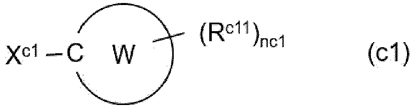 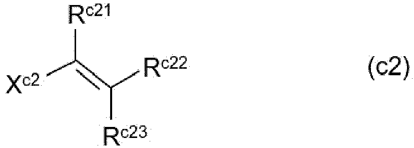 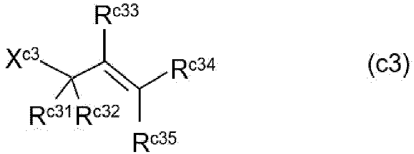 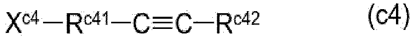
   in the presence of a metal catalyst comprising at least one selected from Pd, Cu, Ni, Pt, and Ag,
      wherein
   X¹¹ and X¹² are each independently a halogen atom or a hydrogen atom, provided that at least one of X¹¹ and X¹² is a halogen atom;
   R¹¹ is a C₁₋₁₆ alkylene group optionally substituted with one or more fluorine atoms;
   n11 is 0 or 1;
   R^{F1} is a group represented by the following formula: -(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
   a1, b1, c1, d1, e1 and f1 are each independently an integer of 0 to 200, the sum of a1, b1, c1, d1, e1 and f1 is 1 or more, and the occurrence order of the respective repeating units enclosed in parentheses provided with a1, b1, c1, d1, e1 or f1 is not limited in the formula; and
   R^{Fa} is each independently at each occurrence a hydrogen atom, a fluorine atom, or a chlorine atom; wherein
   W is each independently a structure having an aromatic ring;
   X^{c1} is a hydrogen atom, a halogen atom, an alkylsilyl group, an alkoxysilyl group, a boron-containing leaving group, an alkylstannyl group, a copper atom, a copper carboxylate salt, or a zinc atom, bonded to a carbon atom, wherein the carbon atom is comprised in the ring of W;
   R^{c11} is a substituent bonded to an atom constituting the ring of W, and is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, or a monovalent organic group;
   nc1 is each independently an integer of 0 or more and less than the number of atoms consisting the ring of W;
   X^{c2}, X^{c3}, and X^{c4} are each independently a hydrogen atom, a halogen atom, an alkylsilyl group, an alkoxysilyl group, a boron-containing leaving group, an alkylstannyl group, a copper atom, a copper carboxylate salt, or a zinc atom;
   R^{c21}, R^{c22}, and R^{c23} are each independently a hydrogen atom, a halogen atom, a C₁₋₆ alkyl group, or a phenyl group;
   R^{c31}, R^{c32}, R^{c33}, R^{c34}, and R^{c35} are each independently a hydrogen atom, a halogen atom, or a C₁₋₆ alkyl group;
   R^{c41} is a single bond, a methylene group, or an ethylene group; and
   R^{c42} is a hydrogen atom or a methyl group.
[2] The method for producing a fluoropolyether group-containing compound according to [1], wherein the reaction of the fluoropolyether group-containing compound (A) with the compound (C) is carried out in a solvent.
[3] The method for producing a fluoropolyether group-containing compound according to [2], wherein the solvent contains a fluorinated solvent.
[4] The method for producing a fluoropolyether group-containing compound according to [2] or [3], wherein the solvent contains a non-fluorinated fluorine solvent.
[5] The method for producing a fluoropolyether group-containing compound according to any one of [1] to [4], wherein the formula (1) is represented by the following formula (1a):

   X¹¹-(R¹¹)ₙ₁₁-R^{F1}-X¹² (1a)

   [In the formula:
   X¹¹ is a fluorine atom, a chlorine atom, or a hydrogen atom;
   X¹² is an iodine atom or a bromine atom;
   n11 is 0 or 1; and
   R¹¹ and R^{F1} are the same as defined in [1].] or by the following formula (1b):
   X¹¹-(R¹¹)ₙ₁₁R^{F1}-X¹² (1b) [In the formula:
   X¹¹ and X¹² are each independently an iodine atom or a bromine atom;
   R¹¹ is a C₁₋₆ alkylene group optionally substituted with one or more fluorine atoms;
   n11 is 0 or 1; and
   R^{F1} is the same as defined in [1].].
[6] The method for producing a fluoropolyether group-containing compound according to any one of [1] to [5], wherein R^{Fa} is a fluorine atom.
[7] The method for producing a fluoropolyether group-containing compound according to any one of [1] to [6], wherein R^{F1} is each independently at each occurrence represented by the following formula (f1), (f2), (f3), (f4), or (f5) :

   -(OC₃F₆)_{d1}-(OC₂F₄)ₑ₁- (f1)

   [In the formula, d1 is an integer of 1 to 200, and e1 is 1.],

   -(OC₄F₈)_{c1}-(OC₃F₆)_{d1}-(OC₂F₄)ₑ₁-(OCF₂)_{f1}- (f2)

   [In the formula, c1 and d1 are each independently an integer of 0 or more and 30 or less, and e1 and f1 are each independently an integer of 1 or more and 200 or less;
   the sum of c1, d1, e1, and f1 is 2 or more; and
   the occurrence order of the respective repeating units enclosed in parentheses provided with a subscript c1, d1, e1, or f1 is not limited in the formula.],

      -(R⁶-R⁷)_{g1}- (f3)

      [In the formula, R⁶ is OCF₂ or OC₂F₄;
   R⁷ is a group selected from OC₂F₄, OC₃F₆, OC₄F₈, OC₅F₁₀, and OC₆F₁₂, or a combination of two or three groups independently selected from these groups; and
   g1 is an integer of 2 to 100.],

      - (OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f4)

      [In the formula, e1 is an integer of 1 or more and 200 or less, a1, b1, c1, d1, and f1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.], and

      -(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f5)

      [In the formula, f1 is an integer of 1 or more and 200 or less, a1, b1, c1, d1, and e1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.]
[8] The method for producing a fluoropolyether group-containing compound according to any one of [1] to [7], wherein R^{c11} is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, a C₁₋₂₀ alkyl group, a phenyl group, a C₁₋₂₀ alkoxy group, a group represented by -OR^{c10}, -NR^{c12}R^{c13}, -SR^{c14}, -COOR^{c15}, -COR^{c16}, -CR^{c17}=C(R^{c18})₂, -C(R^{c20})₂CR^{c17}=C(R^{c18})₂, -PO(OR^{c19})₂, -P(R^{c19'})₂O₂, or -O-P(=O)(OR^{c19"})₂;
   R^{c10} is a monovalent organic group containing at least one O atom or S atom, and containing 2 to 10 carbon atoms;
   R^{c12} to R^{c13} are each independently a hydrogen atom or a C₁₋₂₀ alkyl group, provided that either one of them is a C₁₋₂₀ alkyl group;
   R^{c14} is a C₁₋₂₀ alkyl group;
   R^{c15} to R^{c18} and R^{c20} are each independently a hydrogen atom or a C₁₋₂₀ alkyl group;
   R^{c19} is each independently a hydrogen atom or a C₁₋₂₀ alkyl group, provided that either one of R^{c19} is a C₁₋₂₀ alkyl group;
   R^{c19'} is each independently a hydrogen atom or a C₁₋₂₀ alkyl group, provided that either one of R^{c19'} is a C₁₋₂₀ alkyl group; and
   R^{e19"} is each independently a hydrogen atom or a C₁₋₂₀ alkyl group, provided that either one of R^{c19"} is a C₁₋₂₀ alkyl group.
[9] A fluoropolyether group-containing compound represented by the following formula (b11), (b12), (b21), (b22), (b31), (b32), (b41), or (b42):

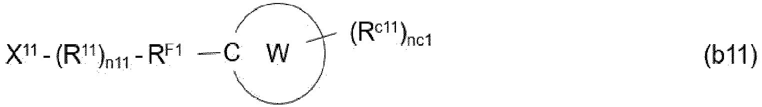

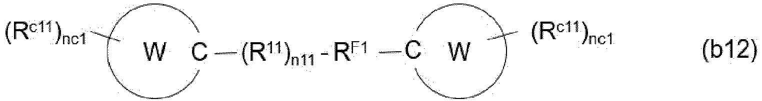

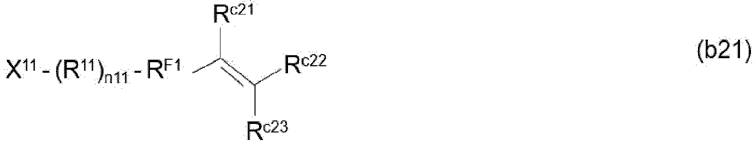

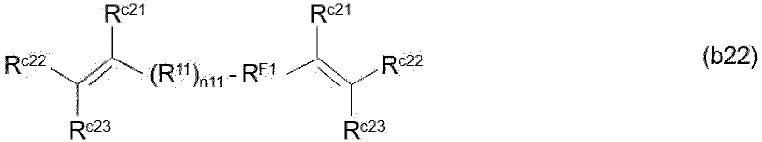

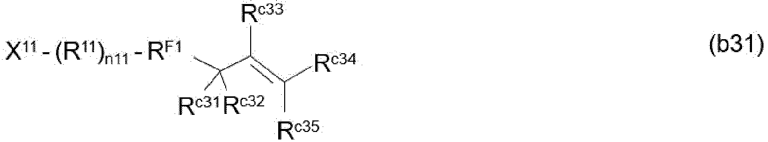

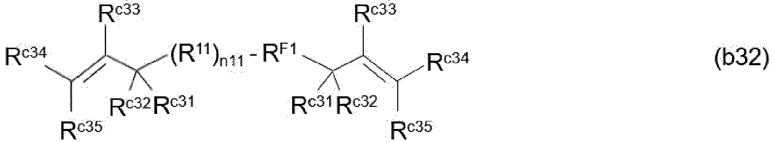

   X¹¹-(R¹¹)ₙ₁₁-R^{F1}-R^{c41}-C≡C-R^{c42} (b41)

   R^{c42}-C≡C-R^{c41}-(R¹¹)ₙ₁₁-R^{F1}-R^{c41}-C≡C-R^{c42} (b42)

   wherein
   X¹¹ is each independently a fluorine atom, a chlorine atom, or a hydrogen atom;
   R¹¹ is each independently a C₁₋₁₆ alkylene group optionally substituted with one or more fluorine atoms;
   n11 is each independently 0 or 1;
   R^{F1} is each independently a group represented by the following formula:

      -(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
   a1, b1, c1, d1, e1 and f1 are each independently an integer of 0 to 200, the sum of a1, b1, c1, d1, e1 and f1 is 1 or more, and the occurrence order of the respective repeating units enclosed in parentheses provided with a1, b1, c1, d1, e1 or f1 is not limited in the formula;
   R^{Fa} is each independently at each occurrence a hydrogen atom, a fluorine atom, or a chlorine atom;
   W is each independently a structure having an aromatic ring;
   R^{c11} is a substituent bonded to an atom constituting the ring of W, and is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, a C₁₋₂₀ alkyl group, a phenyl group, a C₁₋₂₀ alkoxy group, a group represented by -OR^{c10}, -NR^{c12}R^{c13}, -SR^{c14}, -COOR^{c15}, -COR^{c16}, -CR^{c17}=C(R^{c18})₂, -C(R^{c20})₂CR^{c17}=C(R^{c18})₂, -PO(OR^{c19})₂, -P(R^{c19'})₂O₂, or -O-P(=O)(OR^{c19"})₂;
   R^{c10} is a monovalent organic group containing at least one heteroatom;
   R^{c12} to R^{c13} are each independently a hydrogen atom or a C₁₋₂₀ alkyl group, provided that either one of them is a C₁₋₂₀ alkyl group;
   R^{c14} is a C₁₋₂₀ alkyl group;
   R^{c15} to R^{c18} and R^{c20} are each independently a hydrogen atom or a C₁₋₂₀ alkyl group;
   R^{c19} is each independently a hydrogen atom or a C₁₋₂₀ alkyl group, provided that either one of R^{c19} is a C₁₋₂₀ alkyl group;
   R^{c19'} is each independently a hydrogen atom or a C₁₋₂₀ alkyl group, provided that either one of R^{c19'} is a C₁₋₂₀ alkyl group;
   R^{c19"} is each independently a hydrogen atom or a C₁₋₂₀ alkyl group, provided that either one of R^{c19"} is a C₁₋₂₀ alkyl group;
   nc1 is each independently an integer of 0 or more and less than the number of atoms consisting the ring of W;
   R^{c21}, R^{c22}, and R^{c23} are each independently a hydrogen atom, a halogen atom, a C₁₋₆ alkyl group, or a phenyl group;
   R^{c31}, R^{c32}, R^{c33}, R^{c34}, and R^{c35} are each independently a hydrogen atom, a halogen atom, or a C₁₋₆ alkyl group;
   R^{c41} is a single bond, a methylene group, or an ethylene group; and
   R^{c42} is a hydrogen atom or a methyl group.
[10] The fluoropolyether group-containing compound according to [9], wherein R^{F1} is represented by the following formula (f1):

   -(OC₃F₆)_{d1}-(OC₂F₄)ₑ₁- (f1)

   , where d1 is an integer of 3 to 60, and e1 is 1.
[11] The fluoropolyether group-containing compound according to [10], wherein OC₃F₆ is linear.

### Advantageous Effect of Invention

According to the present invention, it is possible to provide a new method for producing a fluoropolyether group-containing compound.

### Description of Embodiments

### (Production Method)

Hereinafter, in one aspect of the present disclosure, a method for producing a fluoropolyether group-containing compound will be described.

The method for producing a fluoropolyether group-containing compound of the present disclosure includes the steps below.

### <Step (I)>

Reacting a fluoropolyether group-containing compound (A) represented by the following formula:

X¹¹-(R¹¹)ₙ₁₁-R^{F1}-X¹² (1)

with
a compound (C) represented by any of the formulae (c1) to (c4) below,
in the presence of a metal catalyst having at least one selected from Pd, Cu, Ni, Pt, and Ag.

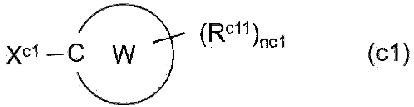

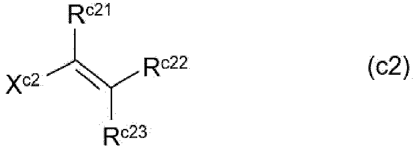

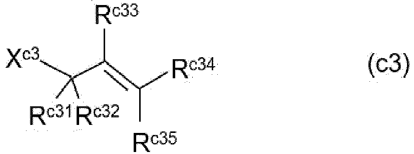

   X^{c4}-R^{c41}-C≡C-R^{c42} (c4)

### (Fluoropolyether Group-Containing Compound (A))

In the formula (1), X¹¹ and X¹² are each independently a halogen atom or a hydrogen atom, and preferably an iodine atom, a bromine atom, a chlorine atom, a fluorine atom, or a hydrogen atom. At least one of X¹¹ and X¹² is a halogen atom, preferably an iodine atom, a bromine atom, a chlorine atom, or a fluorine atom.

At least one of X¹¹ and X¹² is more preferably an iodine atom, a bromine atom, or a chlorine atom. With such a structure, the reaction between the fluoropolyether group-containing compound (A) and the compound (C), which will be mentioned later, can proceed better.

At least one of X¹¹ and X¹² is still more preferably an iodine atom or a bromine atom, and particularly preferably an iodine atom. With such a structure, the reaction between the fluoropolyether group-containing compound (A) and the compound (C) can proceed even better.

In one embodiment, at least one of X¹¹ and X¹² is an iodine atom or a bromine atom. In one embodiment, at least one of X¹¹ and X¹² is a bromine atom.

In one embodiment, X¹¹ is an iodine atom, a bromine atom, or a chlorine atom; and X¹² is a fluorine atom or a hydrogen atom, and preferably a fluorine atom.

In one embodiment, X¹¹ is a fluorine atom or a hydrogen atom, and preferably a fluorine atom; and X¹² is an iodine atom, a bromine atom, or a chlorine atom.

In one embodiment, X¹¹ and X¹² are each independently an iodine atom, a bromine atom, or a chlorine atom.

In one embodiment, X¹¹ is an iodine atom or a bromine atom; and X¹² is a chlorine atom, a fluorine atom, or a hydrogen atom, and preferably a fluorine atom.

In one embodiment, X¹¹ is a fluorine atom or a hydrogen atom, and preferably a fluorine atom; and X¹² is an iodine atom or a bromine atom.

In one embodiment, X¹¹ and X¹² are each independently an iodine atom or a bromine atom.

In one embodiment, X¹¹ is an iodine atom; and X¹² is a chlorine atom, a fluorine atom, or a hydrogen atom, and preferably a fluorine atom.

In one embodiment, X¹¹ is a chlorine atom, a fluorine atom, or a hydrogen atom, and preferably a fluorine atom; and X¹² is an iodine atom.

In one embodiment, X¹¹ and X¹² are each an iodine atom.

In one embodiment, X¹¹ is a bromine atom; and X¹² is a chlorine atom, a fluorine atom, or a hydrogen atom, and preferably a fluorine atom.

In one embodiment, X¹¹ is a chlorine atom, a fluorine atom, or a hydrogen atom, and preferably a fluorine atom; and X¹² is a bromine atom.

In one embodiment, X¹¹ and X¹² are each a bromine atom.

In the formula (1), R¹¹ is a C₁₋₁₆ alkylene group optionally substituted with one or more fluorine atoms.

In the above C₁₋₁₆ alkylene group optionally substituted with one or more fluorine atoms, the "C₁₋₁₆ alkylene group" may be linear or branched, and is preferably a linear or branched C₁₋₆ alkylene group, in particular C₁₋₃ alkylene group, and more preferably a linear C₁₋₆ alkylene group, in particular C₁₋₃ alkylene group.

The above R¹¹ is preferably a C₁₋₁₆ alkylene group substituted with one or more fluorine atoms, and more preferably a C₁₋₁₆ perfluoroalkylene group.

The above C₁₋₁₆ perfluoroalkylene group may be linear or branched, and is preferably a linear or branched C₁₋₆ perfluoroalkylene group, in particular C₁₋₃ perfluoroalkylene group, and more preferably a linear C₁₋₆ perfluoroalkylene group, in particular C₁₋₃ perfluoroalkylene group.

In one embodiment, R¹¹ is a C₁₋₆ alkylene group optionally substituted with one or more fluorine atoms.

In the above embodiment, the "C₁₋₆ alkylene group" may be linear or branched, and is preferably a linear or branched C₁₋₃ alkylene group, and more preferably a linear C₁₋₆ alkylene group, in particular C₁₋₃ alkylene group.

In the above embodiment, R¹¹ is preferably a C₁₋₆ alkylene group substituted with one or more fluorine atoms, and more preferably a C₁₋₆ perfluoroalkylene group. In the present embodiment, the C₁₋₆ perfluoroalkylene group may be linear or branched, and is preferably a linear C₁₋₆ perfluoroalkylene group, in particular C₁₋₃ perfluoroalkylene group.

In the formula (1), n11 is 0 or 1. In one embodiment, n11 is 0. In one embodiment, n11 is 1.

R^{F1} is a group represented by the following formula:

-(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula; and
R^{Fa} is each independently at each occurrence a hydrogen atom, a fluorine atom, or a chlorine atom. In the present specification, R^{F1} is bonded to R¹¹ on the left side and to X¹² on the right side, respectively.

R^{Fa} is preferably a hydrogen atom or a fluorine atom, and more preferably a fluorine atom.

Preferably, a1, b1, c1, d1, e1, and f1 may be each independently an integer of 0 to 100.

The sum of a1, b1, c1, d1, e1, and f1 is preferably 5 or more, and more preferably 10 or more, and it may be, for example, 15 or more or 20 or more. The sum of a1, b1, c1, d1, e1, and f1 is preferably 200 or less, more preferably 100 or less, and still more preferably 60 or less, and it may be, for example, 50 or less or 30 or less.

These repeating units may be straight or branched. For example, in the above repeating units, -(OC₆F₁₂)- may be -(OCF₂CF₂CF₂CF₂CF₂CF₂)-, -(OCF(CF₃)CF₂CF₂CF₂CF₂)-, -(OCF₂CF(CF₃)CF₂CF₂CF₂)-, -(OCF₂CF₂CF(CF₃)CF₂CF₂)-, -(OCF₂CF₂CF₂CF(CF₃)CF₂)-, -(OCF₂CF₂CF₂CF₂CF(CF₃))-, or the like. -(OC₅F₁₀)- may be -(OCF₂CF₂CF₂CF₂CF₂)-, -(OCF(CF₃)CF₂CF₂CF₂)-, -(OCF₂CF(CF₃)CF₂CF₂)-, -(OCF₂CF₂CF(CF₃)CF₂)-, -(OCF₂CF₂CF₂CF(CF₃))-, or the like. -(OC₄F₈)- may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, -(OCF(CF₃)CF(CF₃))-, -(OCF(C₂F₅)CF₂)-, and -(OCF₂CF(C₂F₅))-. -(OC₃F₆)- (that is, in the above formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and -(OCF(CF₃))-.

In one embodiment, the above repeating units are straight.

In one embodiment, the above repeating units include branched ones.

In one embodiment, R^{F1} is each independently at each occurrence a group represented by any of the following formulae (f1) to (f5):

-(OC₃F₆)_{d1}-(OC₂F₄)ₑ₁- (f1)

[In the formula, d1 is an integer of 1 to 200 and e1 is 1.];

-(OC₄F₈)_{c1}- (OC₃F₆)_{d1}- (OC₂F₄)ₑ₁-(OCF₂)_{f1}- (f2)

[In the formula, c1 and d1 are each independently an integer of 0 or more and 30 or less and e1 and f1 are each independently an integer of 1 or more and 200 or less;
the sum of c1, d1, e1, and f1 is 2 or more; and
the occurrence order of the respective repeating units enclosed in parentheses provided with a subscript c1, d1, e1, or f1 is not limited in the formula.];

   -(R⁶-R⁷)_{g1}- (f3)

   [In the formula, R⁶ is OCF₂ or OC₂F₄;
R⁷ is a group selected from OC₂F₄, OC₃F₆, OC₄F₈, OC₅F₁₀, and OC₆F₁₂, or a combination of two or three groups independently selected from these groups; and
g1 is an integer of 2 to 100.];

   -(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f4)

   [In the formula, e1 is an integer of 1 or more and 200 or less, a1, b1, c1, d1, and f1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.]; and

   -(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f5)

   [In the formula, f1 is an integer of 1 or more and 200 or less, a1, b1, c1, d1, and e1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.].

In the above formula (f1), d1 is preferably 5 to 200, more preferably 10 to 100, and still more preferably 15 to 50, and it is, for example, an integer of 25 to 35. The above formula (f1) is preferably a group represented by -(OCF₂CF₂CF₂)_{d1}-(OC₂F₄)ₑ₁- or -(OCF(CF₃)CF₂)_{d1}-(OC₂F₄)ₑ₁-, and more preferably a group represented by

-(OCF₂CF₂CF₂)_{d1}-(OC₂F₄)ₑ₁-.

In the above formula (f2), e1 and f1 are each independently an integer of preferably 5 or more and 200 or less, and more preferably 10 to 200. In addition, the sum of c1, d1, e1, and f1 is preferably 5 or more, and more preferably 10 or more, and it may be, for example, 15 or more or 20 or more. In one embodiment, the above formula (f2) is preferably a group represented by -(OCF₂CF₂CF₂CF₂)_{c1}-(OCF₂CF₂CF₂)_{d1}-(OCF₂CF₂)ₑ₁-(OCF₂)_{f1}-. In another embodiment, the formula (f2) may be a group represented by -(OC₂F₄)ₑ₁-(OCF₂)_{f1}-.

In the above formula (f3), R⁶ is preferably OC₂F₄. In the above formula (f3), R⁷ is preferably a group selected from OC₂F₄, OC₃F₆, and OC₄F₈, or a combination of two or three groups independently selected from these groups, and more preferably a group selected from OC₃F₆ and OC₄F₈. Examples of the combination of two or three groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, -OC₃F₆OC₃F₆-, -OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, -OC₂F₄OC₂F₄OC₄F₈-, -OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and -OC₄F₈OC₂F₄OC₂F₄-. In the above formula (f3), g1 is an integer of preferably 3 or more, and more preferably 5 or more. The above g1 is preferably an integer of 50 or less. In the above formula (f3), OC₂F₄, OC₃F₆, OC₄F₈, OC₅F₁₀, and OC₆F₁₂ may be either linear or branched, and are preferably linear. In this embodiment, the above formula (f3) is preferably -(OC₂F₄-OC₃F₆)_{g1}- or -(OC₂F₄-OC₄F₈)_{g1}-.

In the above formula (f4), e1 is an integer of preferably 1 or more and 100 or less, and more preferably 5 or more and 100 or less. The sum of a1, b1, c1, d1, e1, and f1 is preferably 5 or more, and more preferably 10 or more, and it is, for example, 10 or more and 100 or less.

In the above formula (f5), f1 is an integer of preferably 1 or more and 100 or less, and more preferably 5 or more and 100 or less. The sum of a1, b1, c1, d1, e1, and f1 is preferably 5 or more and more preferably 10 or more, and it is, for example, 10 or more and 100 or less.

In one embodiment, the above R^{F1} is a group represented by the above formula (f1).

In one embodiment, the above R^{F1} is a group represented by the above formula (f2).

In one embodiment, the above R^{F1} is a group represented by the above formula (f3).

In one embodiment, the above R^{F1} is a group represented by the above formula (f4).

In one embodiment, the above R^{F1} is a group represented by the above formula (f5).

In the above R^{F1}, the ratio of e1 to f1 (hereinafter, referred to as an "e/f ratio") is, for example, 0.1 or more and 10 or less, preferably 0.2 or more and 5 or less, more preferably 0.2 to 2, still more preferably 0.2 or more and 1.5 or less, even more preferably 0.2 or more and less than 0.9, and particularly preferably 0.2 or more and 0.85 or less. With the e/f ratio being in the above range, the stability of the fluoropolyether group-containing compound is improved. Here, f1 is an integer of 1 or more.

In one embodiment, the e/f ratio in R^{F1} is preferably 1.0 or more, and it may be, for example, 1.1 or more or 1.3 or more. The e/f ratio in R^{F1} is preferably 10.0 or less, 9.0 or less, more preferably 5.0 or less, still more preferably 2.0 or less, and particularly preferably 1.5 or less. Examples of the e/f ratio in R^{F1} may include 1.0 to 10.0, specifically 1.0 to 5.0, more specifically 1.0 to 2.0, and further specifically 1.0 to 1.5.

In one embodiment, the e/f ratio in R^{F1} may be in the range of 1.0 to 1.2.

In one embodiment, the e/f ratio in R^{F1} may be less than 0.9, for example, 0.8 or less or 0.7 or less. In R^{F1}, the e/f ratio is preferably 0.2 or more, more preferably 0.3 or more, still more preferably 0.4 or more, and particularly preferably 0.5 or more. In R^{F1}, examples of the e/f ratio may include 0.2 or more and less than 0.9, specifically 0.4 or more and 0.8 or less, and more specifically 0.5 or more and 0.7 or less.

In one embodiment, d1 is preferably an integer of 1 or more, more preferably 3 or more, and still more preferably 6 or more, and it may be 200 or less, may be 120 or less, may be 60 or less, or may be 54 or less. In the present embodiment, d1 may be 1 to 200, may be 3 to 120, may be 3 to 60, or may be 6 to 60.

In one embodiment, R^{F1} is a group represented by the following formula:

-(OC₃F₆)_{d1}-(OC₂F₄)ₑ₁- (f1)

[In the formula, d1 is an integer of 3 to 60, preferably an integer of 6 to 54; e1 is 1; and OC₃F₆ is linear.].

In one embodiment, R^{F1} is a group represented by the following formula:

-(OC₃F₆)_{d1}-(OC₂F₄)ₑ₁- (f1)

[In the formula, d1 is an integer of 3 to 120, preferably an integer of 6 to 60; e1 is 1; and each OC₃F₆ has a branched chain.].

For example, in the formula (f1), the repeating unit is represented by -OCF(CF₃)CF₂-.

In one embodiment, the formula (1) is represented by the following formula (1a) or (1b):

X¹¹-(R¹¹)ₙ₁₁-R^{F1}-X¹² (1a)

[In the formula:
X¹¹ is a fluorine atom, a chlorine atom, or a hydrogen atom;
X¹² is an iodine atom or a bromine atom;
R¹¹ is the same as defined above, and is preferably a C₁₋₁₆ perfluoroalkylene group, and more preferably a linear C₁₋₆ perfluoroalkylene group, in particular C₁₋₃ perfluoroalkylene group;
n11 is 0 or 1; and
R^{F1} is the same as defined above.] or

   X¹¹-(R¹¹)ₙ₁₁R^{F1}-X¹² (1b)

   [In the formula:
X¹¹ and X¹² are each independently an iodine atom or a bromine atom;
R¹¹ is preferably a C₁₋₆ alkylene group optionally substituted with one or more fluorine atoms, in particular C₁₋₃ perfluoroalkylene group, and more preferably a linear C₁₋₆ perfluoroalkylene group, in particular a linear C₁₋₃ perfluoroalkylene group;
n11 is 0 or 1, preferably 1; and
R^{F1} is the same as defined above.].

In one embodiment, the formula (1) is represented by the following formula (1a) or (1b):

X¹¹-(R¹¹)ₙ₁₁-R^{F1}-X¹² (1a)

[In the formula:
X¹¹ is a fluorine atom, a chlorine atom, or a hydrogen atom;
X¹² is an iodine atom;
R¹¹ is the same as defined above, and is preferably a C₁₋₁₆ perfluoroalkylene group, and more preferably a linear C₁₋₆ perfluoroalkylene group, in particular C₁₋₃ perfluoroalkylene group;
n11 is 0 or 1; and
R^{F1} is the same as defined above.] or

   X¹¹-(R¹¹)ₙ₁₁R^{F1}-X¹² (1b)

   [In the formula:
X¹¹ and X¹² are each an iodine atom;
R¹¹ is preferably a C₁₋₆ alkylene group optionally substituted with one or more fluorine atoms, in particular C₁₋₃ perfluoroalkylene group, and more preferably a linear C₁₋₆ perfluoroalkylene group, in particular a linear C₁₋₃ perfluoroalkylene group;
n11 is 0 or 1, preferably 1; and
R^{F1} is the same as defined above.].

The number average molecular weight of the above R^{F1} moiety is not limited, and is, for example, 500 to 30,000, preferably 1,500 to 30,000, and more preferably 2,000 to 10,000. In the present specification, the number average molecular weight of R^{F1} is defined as a value obtained by ¹⁹F-NMR measurement.

In another embodiment, the number average molecular weight of the R^{F1} moiety may be 500 to 30,000, preferably 1,000 to 20,000, more preferably 2,000 to 15,000, and still more preferably 2,000 to 10,000, such as 3,000 to 6,000.

In another embodiment, the number average molecular weight of the R^{F1} moiety may be 4,000 to 30,000, preferably 5,000 to 10,000, and more preferably 6,000 to 10,000.

### (Compound (C))

The compound (C) is a compound having at least one selected from an aromatic ring, an allyl group, a vinyl group, and an alkyne group, and is represented by any of the following formulae (c1) to (c4):

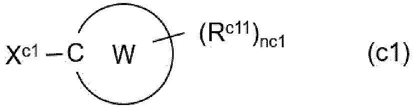

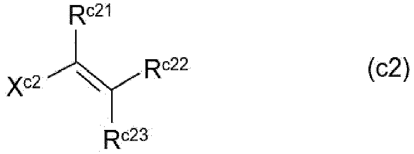

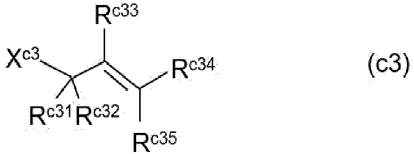

X^{c4}-R^{c41}-C≡C-R^{c42} (c4)

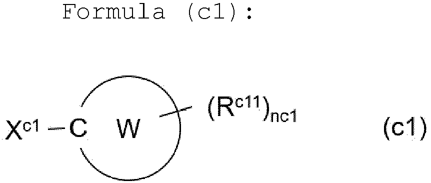

In the formula (c1), W is a structure having an aromatic ring. W may be a structre having an aromatic ring, wherein the ring structure contains a heteroatom; or W may be a structrure having an aromatic ring, wherein the ring structure is consisted only of carbon atoms. In one embodiment, W is a structre having an aromatic ring, wherein the ring structure contains a heteroatom. In one embodiment, W is a structre having an aromatic ring, wherein the ring structure is consisted only of carbon atoms.

In one embodiment, W has only a single ring. W may be, for example, a ring constituted by five to six atoms.

Examples of the heteroatom may include a nitrogen atom, an oxygen atom, and a sulfur atom.

In the formula (c1), X^{c1} is bonded to any one carbon atom, wherein the carbon atom constitutes the ring structure. X^{c1} is a hydrogen atom, a halogen atom (for example, a chlorine atom, a bromine atom, or an iodine atom), an alkylsilyl group, an alkoxysilyl group, a boron-containing leaving group, an alkylstannyl group, a copper atom, a copper carboxylate salt, or a zinc atom.

In the reaction in step (I), when the compound (C) is represented by the formula (c1), a structure derived from the fluoropolyether compound (A) is introduced into the carbon atom to which X^{c1} is bonded.

In one embodiment, X^{c1} is a hydrogen atom.

In one embodiment, X^{c1} is a chlorine atom.

In one embodiment, X^{c1} is a bromine atom.

In one embodiment, X^{c1} is an iodine atom.

In one embodiment, X^{c1} is an alkylsilyl group (for example, a trimethylsilyl group, a triethylsilyl group, a methyldiphenylsilyl group, a dimethylphenylsilyl group, a triphenylsilyl group, a tert-butyldimethylsilyl group, a tert-butyldiphenylsilyl group, a tris(trimethylsilyl)trisilyl group, or a tris(triethylsilyl)trisilyl group), or an alkoxysilyl group (for example, a trimethoxysilyl group or a triethoxysilyl group).

In one embodiment, X^{c1} may be a boron-containing leaving group, for example, a structure derived from a boronic acid derivative or a borane derivative. The boronic acid derivative may be, for example, an alkylboronic acid derivative, a trimeric derivative of boronic acid, or the like. In the alkylboronic acid derivative, the alkyl chain and the BO₂ moiety of the boronic acid may form a cyclic structure. Examples of the boronic acid derivative may include the structures shown in (g1), (g3), and (g4) below. Examples of the borane derivative may include the structure shown in (g2) below. Note that the structure derived from a boronic acid derivative or a borane derivative refers to the residue in which a specific atom has been removed from the boronic acid derivative or the borane derivative. R^{g} may be each independently a hydrogen atom, a halogen atom, or a monovalent organic group. Note that "*" represents a bond in the formulae (g1) to (g4).

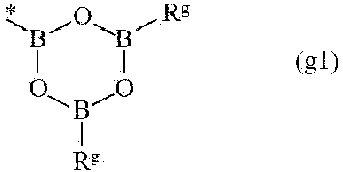

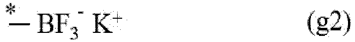

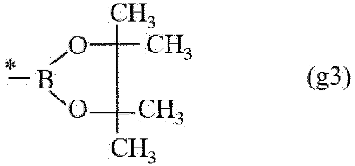

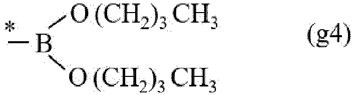

In one embodiment, X^{c1} is an alkylstannyl group, for example, a tributylstannyl group, a trimethylstannyl group, or a triethylstannyl group.

In one embodiment, X^{c1} is a copper atom. In one embodiment, X^{c1} is a copper carboxylate salt. In another embodiment, X^{c1} is a zinc atom.

X^{c1} may be, for example, a bromine atom, an iodine atom, a trimethylsilyl group, a triethylsilyl group, a tris(trimethylsilyl)trisilyl group, or a tributylstannyl group, or may be a bromine atom, an iodine atom, a trimethylsilyl group, or a tributylstannyl group.

In one embodiment, X^{c1} is a hydrogen atom or an iodine atom.

In the formula (c1), R^{c11} is a substituent bonded to an atom constituting the ring of W, and is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, or a monovalent organic group, and preferably a fluorine atom, a chlorine atom, -NO₂, -OH, -NH₂, -PO(OH)₂, or a monovalent organic group. The atom to which R^{c11} is bonded is different from an atom to which X^{c1} is bonded. Hydrogen atoms are bonded to the atoms to which neither R^{c11} nor X^{c1} is bonded.

The monovalent organic group in R^{c11} refers to a monovalent group containing carbon. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group.

Examples of the monovalent organic group in R^{c11} may include a C₁₋₂₀ alkyl group (for example, a methyl group and a t-butyl group), a phenyl group, a C₁₋₂₀ alkoxy group, a group represented by -OR^{c10} (R^{c10} is a monovalent organic group containing at least one heteroatom), -NR^{c12}R^{c13}, -SR^{c14}, -COOR^{c15}, -COR^{c16}, -CR^{c17}=C (R^{c18})₂, -C (R^{c20})₂CR^{c17}=C (R^{c18})₂, -PO (OR^{c19})₂, -P (R^{c19'}) ₂O₂, and -O-P(=O) (OR^{c19"})₂.

R^{c12} to R^{c13} are each independently a hydrogen atom or a C₁₋₂₀ alkyl group, provided that either one of them is a C₁₋₂₀ alkyl group.
R^{c14} is a C₁₋₂₀ alkyl group.
R^{c15} to R^{c18} and R^{c20} are each independently a hydrogen atom or a C₁₋₂₀ alkyl group.
R^{c19} is each independently a hydrogen atom or a C₁₋₂₀ alkyl group, provided that either one of R^{c19} is a C₁₋₂₀ alkyl group.
R^{c19}' is each independently a hydrogen atom or a C₁₋₂₀ alkyl group, provided that either one of R^{c19}' is a C₁₋₂₀ alkyl group.
R^{c19"} is each independently a hydrogen atom or a C₁₋₂₀ alkyl group, provided that either one of R^{c19}'' is a C₁₋₂₀ alkyl group.

The alkyl group in R^{c12} to R^{c20}, R^{c19'}, and R^{c19"} may be a C₁₋₂ alkyl group.

In one embodiment, with respect to R^{c12} to R^{c13}, only one of them is a C₁₋₂₀ alkyl group.

In one embodiment, R^{c12} to R^{c13} are each independently a C₁₋₂₀ alkyl group.

In one embodiment, only one of R^{c19} is a C₁₋₂₀ alkyl group.

In one embodiment, R^{c19} is each independently a C₁₋₂₀ alkyl group.

In one embodiment, only one of R^{c19}' is a C₁₋₂₀ alkyl group.

In one embodiment, R^{c19'} is each independently a C₁₋₂₀ alkyl group.

In one embodiment, only one of R^{c19"} is a C₁₋₂₀ alkyl group.

In one embodiment, R^{c19ʺ} is each independently a C₁₋₂₀ alkyl group.

Here, the C₁₋₂₀ alkyl group and C₁₋₂₀ alkoxy group in R^{c11}, as well as the alkyl group that may be contained in R^{c12} to R^{c20}, may be linear or may have a branched structure.

These monovalent organic groups may be substituted or unsubstituted. When they are substituted, examples of the substituent include one or more groups selected from a halogen atom; and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆-₁₀ aryl group, and a 5- to 10-membered heteroaryl group, each of which is optionally substituted with one or more halogen atoms.

R^{c10} is a monovalent organic group containing at least one heteroatom. Examples of the heteroatom may include an O atom and a S atom. Examples of the monovalent organic group in R^{c10} may include an organic group containing 2 to 10 carbon atoms. In other words, R^{c10} may be a monovalent organic group containing at least one (for example, one) O atom or S atom and containing 2 to 10 carbon atoms. Examples of R^{c10} may include -CH₂OCH₃, -CH₂OCH₂CH₂OCH₃, -CH (CH₃) OCH₂CH₃, -CH₂OC₆H₅ (here, C₆H₅ is a benzene ring), -C₅H₉O (here, C₅H₉O is a tetrahydropyranyl group), and -CH₂SCH₃.

Preferably, R^{c11} is each independently a fluorine atom, a chlorine atom, a bromine atom, an iodine atom, -NO₂, -OH, -NH₂, -PO(OH)₂, -PH₂O₂, -O-P(=O) (OH) ₂, -SH, -SOOH, -SeH, a methyl group, a t-butyl group, a phenyl group, a C₁₋₄ alkoxy group (for example, a methoxy group), -OCH₂OCH₃, -OCH₂OCH₂CH₂OCH₃, -OCH (CH₃) OCH₂CH₃, -OCH₂OC₆H₅ (here, C₆H₅ is a benzene ring), -O-C₅H₉O (here, C₅H₉O is a tetrahydropyranyl group), -OCH₂SCH₃, -N (CH₃)₂, -SCH₃, -COOCH₃, -COOC₂H₅, -COOH, -COCH₃, -CH=CH₂, -CH₂CH=CH₂, -PO (OCH₃) ₂, or -PO (OCH₂CH₃) ₂.

Still more preferably, R^{c11} is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, a methyl group, a t-butyl group, a phenyl group, a C₁₋₄ alkoxy group (for example, a methoxy group), -OCH₂OCH₃, -OCH₂OCH₂CH₂OCH₃, -OCH (CH₃) OCH₂CH₃, -OCH₂OC₆H₅ (here, C₆H₅ is a benzene ring), -N (CH₃)₂, -SCH₃, -COOCH₃, -COOC₂H₅, -COOH, -COCH₃, -CH=CH₂, -CH₂CH=CH₂, -PO(OCH₃)₂, or -PO (OCH₂CH₃) ₂.

In one embodiment, R^{c11} may be an electron withdrawing group, and it may be, for example, a chlorine atom, -CF₃, -CN, -NO₂, -COOH, or -COOR^{c15}, or may be -COOH or -COOR^{c15}. Here, R^{c15} is a C₁₋₂₀ alkyl group.

nc1 represents the number of R^{c11} group. nc1 is an integer of 0 or more, and is less than the number of atoms consisting the ring of W. That is, among the atoms which consits the ring, the atoms other than the carbon atom to which X^{c1} is bonded may be substituted by R^{c11}.

In one embodiment, nc1 is 0. That is, in the present embodiment, the compound represented by the formula (c1) does not include the substituent R^{c11}.

In one embodiment, nc1 is 1.

In one embodiment, nc1 is 2.

In one embodiment, examples of the compound represented by the formula (c1) include the structures below. X^{c1} is bonded to any one carbon atom that constitutes the ring structure. The substituent R^{c11} may be bonded to an atom that constitutes the ring structure, wherein the atom excludes the carbon atom to which X^{c1} is bonded. The atom is, for example, a carbon atom or a heteroatom.

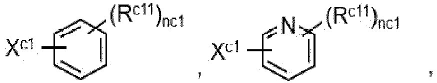

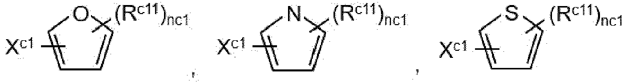

In the present embodiment, it is preferable that nc1 is an integer of 0 to 2. nc1 may be 0, may be 1, or may be 2.

In one embodiment, W is a 6-membered ring and is a ring consisting only of carbon atoms. In other words, the formula (c1) is represented as follows, in the present embodiment. X^{c1} is the same as defined above.

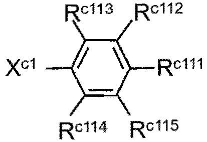

In the present embodiment, for example, when nc1 is 0, W is a benzene ring.

In the present embodiment, for example, when nc1 is 1, R^{c111} may be R^{c11} and R^{c112} to R^{c115} may each be a hydrogen atom; either one of R^{c112} or R^{c115} may be R^{c11}, and the other of R^{c112} or R^{c115}, R^{c111}, and R^{c113} to R^{c114} may each be a hydrogen atom; or either one of R^{c113} or R^{c114} may be R^{c11}, and the other of R^{c113} or R^{c114}, R^{c111} to R^{c112}, and R^{c115} may each be a hydrogen atom. R^{c11} is the same as defined above.

For example, when nc1 is 1 and R^{c111} is R^{c11}, R^{c11} may be a fluorine atom, a chlorine atom, a bromine atom, -NH₂, a C₁₋₄ alkyl group (for example, a methyl group or a t-butyl group), a phenyl group, a C₁₋₄ alkoxy group, - OCH₂OCH₃, -OCH₂OCH₂CH₂OCH₃, -OCH (CH₃) OCH₂CH₃, -OCH₂OC₆H₅ (here, C₆H₅ is a benzene ring), -O-C₅H₉O (here, C₅H₉O is a tetrahydropyranyl group), -OCH₂SCH₃, -SCH₃, -COOCH₃, -COOC₂H₅, -COOH, -COCH₃, -CH=CH₂, -CH₂CH=CH₂, -PO(OCH₃)₂, or -PO (OCH₂CH₃) ₂.

For example, when nc1 is 1 and R^{c112} or R^{c115} is R^{c11}, R^{c11} may be a chlorine atom, -NH₂, a methyl group, a C₁₋₄ alkoxy group, -OCH₂OCH₃, -OCH₂OCH₂CH₂OCH₃, -OCH (CH₃) OCH₂CH₃, -OCH₂OC₆H₅ (here, C₆H₅ is a benzene ring), -O-C₅H₉O (here, C₅H₉O is a tetrahydropyranyl group), -OCH₂SCH₃, -COOH, -COOCH₃, -N(CH₃)₂, -CH=CH₂, -CH₂CH=CH₂, -PO(OCH₃)₂, or -PO (OCH₂CH₃) ₂.

For example, when nc1 is 1 and R^{c113} or R^{c114} is R^{c11}, R^{c11} may be a chlorine atom, a fluorine atom, a methyl group, a methoxy group, or -N(CH₃)₂.

In the present embodiment, for example, when nc1 is 2,
either one of R^{c112} or R^{c115} and R^{c111} may be R^{c11}, and the other of R^{c112} or R^{c115} and R^{c113} to R^{c114} may each be a hydrogen atom (that is, R^{c112} and R^{c111} are R^{c11}, and R^{c115} and R^{c113} to R^{c114} are each a hydrogen atom; or R^{c115} and R^{c111} are R^{c11}, and R^{c112} and R^{c113} to R^{c114} are each a hydrogen atom);
either one of R^{c113} or R^{c114} and R^{c111} may be R^{c11}, and the other of R^{c113} or R^{c114}, R^{c112}, and R^{c115} may each be a hydrogen atom (that is, R^{c113} and R^{c111} are R^{c11}, and R^{c114}, R^{c112}, and R^{c115} are each a hydrogen atom; or R^{c114} and R^{c111} are R^{c11}, and R^{c113}, R^{c112}, and R^{c115} are each a hydrogen atom);
R^{c112} and R^{c115} may be R^{c11}, and R^{c111} and R^{c113} to R^{c114} may each be a hydrogen atom; R^{c113} and R^{c114} may be R^{c11}, and R^{c111}, R^{c112}, and R^{c115} may each be a hydrogen atom; R^{c112} and R^{c113} may be R^{c11}, and R^{c111} and R^{c114} to R^{c115} may each be a hydrogen atom (or R^{c114} and R^{c115} are R^{c11}, and R^{c111} to R^{c113} are each a hydrogen atom); or
R^{c113} and R^{c115} may be R^{c11}, and R^{c111}, R^{c112}, and R^{c114} may each be a hydrogen atom (or R^{c112} and R^{c114} are R^{c11}, and R^{c111}, R^{c113}, and R^{c115} are each a hydrogen atom) .
R^{c11} is the same as defined above.

In one embodiment, R^{c112} and R^{c115} are R^{c11}, and R^{c111} and R^{c113} to R^{c114} are each a hydrogen atom.

In one embodiment, when nc1 is 2, only one of R^{c113} or R^{c114} and R^{c111} are R^{c11}, and the other of R^{c113} or R^{c114}, R^{c112}, and R^{c115} are each a hydrogen atom.

When n11 is 2, examples of the compound represented by the formula (c1) may include the following structures:

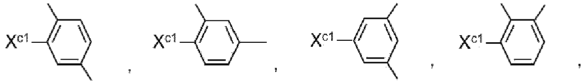

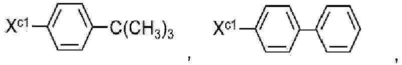

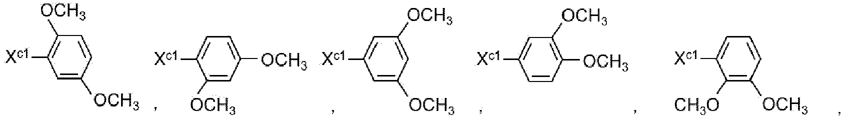

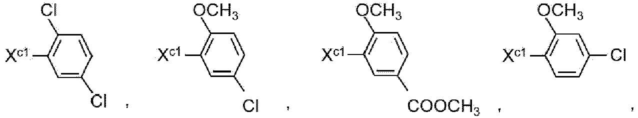

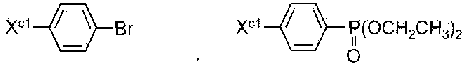

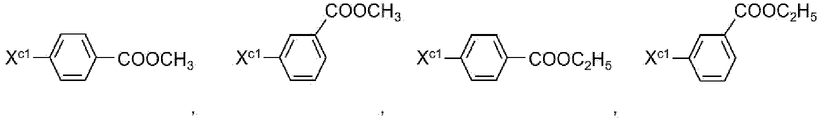

In the present embodiment, for example, when nc1 is 3,
R^{c111} and R^{c113} to R^{c114} may be R^{c11}, and R^{c112} and R^{c115} may each be a hydrogen atom; or
R^{c111} to R^{c112} and R^{c115} may be R^{c11}, and R^{c113} to R^{c114} may each be a hydrogen atom.
R^{c11} is the same as defined above.

In the present embodiment, when R^{c113} and/or R^{c114} are R^{c11}, R^{c11} may be a linear alkyl group (for example, a methyl group).

In one embodiment, the formula (c1) is represented by the formula below. In the formula below, X^{c1} is bonded to any one carbon atom, wherein the ring is comprised of the carbon atom. The substituent R^{c11} may be bonded to an atom that is comprised in the ring, wherein the atom is not the carbon atom to which X^{c1} is bonded (the atom is, for example, a carbon atom or a nitrogen atom).

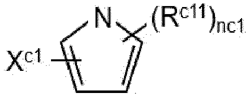

R^{c11}, nc1, and X^{c1} are each the same as defined above. For example, R^{c11} is a C₁₋₂₀ alkyl group (specifically, a methyl group); nc1 may be 0 or may be 1; and X^{c1} is an iodine atom. In the present embodiment, specifically, mention may be made of the following compound:

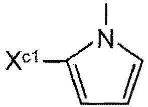

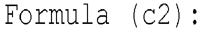

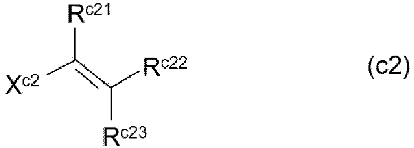

In the formula (c2), X^{c2} is a hydrogen atom, a halogen atom (for example, a chlorine atom, a bromine atom, or an iodine atom), an alkylsilyl group, an alkoxysilyl group, a boron-containing leaving group, an alkylstannyl group, a copper atom, a copper carboxylate salt, or a zinc atom.

Note that, in the reaction in step (I), when the compound (C) is represented by the formula (c2), a structure derived from the fluoropolyether compound (A) is introduced into the carbon atom to which X^{c2} is bonded.

In one embodiment, X^{c2} is a hydrogen atom. In one embodiment, X^{c2} is a chlorine atom. In one embodiment, X^{c2} is an iodine atom. In one embodiment, X^{c2} is a bromine atom.

In one embodiment, X^{c2} is an alkylsilyl group (for example, a trimethylsilyl group, a triethylsilyl group, a methyldiphenylsilyl group, a dimethylphenylsilyl group, a triphenylsilyl group, a (tert-butyl)dimethylsilyl group, a (tert-butyl)diphenylsilyl group, a tris(trimethylsilyl)trisilyl group, or a tris(triethylsilyl)trisilyl group), or an alkoxysilyl group (for example, a trimethoxysilyl group or a triethoxysilyl group).

In one embodiment, X^{c2} may be a boron-containing leaving group, for example, a structure derived from a boronic acid derivative or a borane derivative. The structure derived from a boronic acid derivative or a borane derivative is as described above.

In one embodiment, X^{c2} is an alkylstannyl group (for example, a tributylstannyl group, a trimethylstannyl group, or a triethylstannyl group).

In one embodiment, X^{c2} is a copper atom. In one embodiment, X^{c2} is a copper carboxylate salt. In another embodiment, X^{c2} is a zinc atom.

In one embodiment, X^{c2} may be, for example, a bromine atom, an iodine atom, a trimethylsilyl group, a triethylsilyl group, or a tributylstannyl group, or may be a bromine atom, an iodine atom, a trimethylsilyl group, or a tributylstannyl group.

R^{c21}, R^{c22}, and R^{c23} are each independently a hydrogen atom, a halogen atom, a C₁₋₆ alkyl group (preferably a methyl group or an ethyl group), or a phenyl group.

In one embodiment, R^{c21} is a hydrogen atom or a linear C₁₋₂ alkyl group (for example, a methyl group).

In one embodiment, R^{c21} is a hydrogen atom, and R^{c22} and R^{c23} are each independently a hydrogen atom, a halogen atom, a C₁₋₆ alkyl group (preferably a methyl group or an ethyl group), or a phenyl group.

In one embodiment, R^{c22} is a C₁₋₆ alkyl group (preferably a methyl group or an ethyl group) or a phenyl group, preferably a phenyl group, and R^{c23} is a hydrogen atom.

In one embodiment, R^{c21} is a hydrogen atom, R^{c22} is a C₁₋₆ alkyl group (preferably a methyl group or an ethyl group) or a phenyl group, preferably a phenyl group, and R^{c23} is a hydrogen atom.

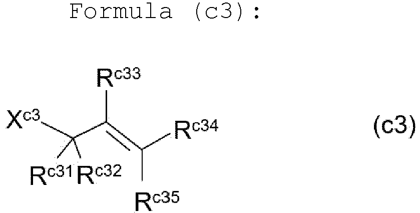

In the formula (c3), X^{c3} is a hydrogen atom, a halogen atom (for example, a chlorine atom, a bromine atom, or an iodine atom), an alkylsilyl group, an alkoxysilyl group, a boron-containing leaving group, an alkylstannyl group, a copper atom, a copper carboxylate salt, or a zinc atom.

In the reaction in step (I), when the compound (C) is represented by the formula (c3), a structure derived from the fluoropolyether compound (A) is introduced into the carbon atom to which X^{c3} is bonded.

In one embodiment, X^{c3} is a hydrogen atom. In one embodiment, X^{c3} is a chlorine atom. In one embodiment, X^{c3} is an iodine atom. In one embodiment, X^{c3} is a bromine atom.

In one embodiment, X^{c3} is an alkylsilyl group (for example, a trimethylsilyl group, a triethylsilyl group, a methyldiphenylsilyl group, a dimethylphenylsilyl group, a triphenylsilyl group, a (tert-butyl)dimethylsilyl group, a (tert-butyl)diphenylsilyl group, a tris(trimethylsilyl)trisilyl group, or a tris(triethylsilyl)trisilyl group), or an alkoxysilyl group (for example, a trimethoxysilyl group or a triethoxysilyl group).

In one embodiment, X^{c3} may be a boron-containing leaving group, for example, a structure derived from a boronic acid derivative or a borane derivative. The structure derived from a boronic acid derivative or a borane derivative is the same as above.

In one embodiment, X^{c3} is an alkylstannyl group (for example, a tributylstannyl group, a trimethylstannyl group, or a triethylstannyl group).

In one embodiment, X^{c3} is a copper atom. In one embodiment, X^{c3} is a copper carboxylate salt. In another embodiment, X^{c3} is a zinc atom.

In one embodiment, X^{c3} may be, for example, a bromine atom, an iodine atom, a trimethylsilyl group, a triethylsilyl group, or a tributylstannyl group, or may be a bromine atom, an iodine atom, a trimethylsilyl group, or a tributylstannyl group.

R^{c31}, R^{c32}, R^{c33}, R^{c34}, and R^{c35} are each independently a hydrogen atom, a halogen atom, or a C₁₋₆ alkyl group (preferably a methyl group or an ethyl group).

In one embodiment, R^{c31} and R^{c32} are each a hydrogen atom.

Formula (c4):

**X^{c4}-R^{c41}-C≡C-R^{c42}** **(c4)**

In the formula (c4), X^{c4} is a hydrogen atom, a halogen atom (for example, a chlorine atom, a bromine atom, or an iodine atom), an alkylsilyl group, an alkoxysilyl group, a boron-containing leaving group, an alkylstannyl group, a copper atom, a copper carboxylate salt, or a zinc atom.

In the reaction in step (I), when the compound (C) is represented by the formula (c4), a structure derived from the fluoropolyether compound (A) is introduced into the carbon atom to which X^{c4} is bonded.

In one embodiment, X^{c4} is a hydrogen atom. In one embodiment, X^{c4} is a chlorine atom. In one embodiment, X^{c4} is an iodine atom. In one embodiment, X^{c4} is a bromine atom.

In one embodiment, X^{c4} is an alkylsilyl group (for example, a trimethylsilyl group, a triethylsilyl group, a methyldiphenylsilyl group, a dimethylphenylsilyl group, a triphenylsilyl group, a (tert-butyl)dimethylsilyl group, a (tert-butyl)diphenylsilyl group, a tris(trimethylsilyl)trisilyl group, or a tris(triethylsilyl)trisilyl group), or an alkoxysilyl group (for example, a trimethoxysilyl group or a triethoxysilyl group).

In one embodiment, X^{c4} may be a boron-containing leaving group, for example, a structure derived from a boronic acid derivative or a borane derivative. The structure derived from a boronic acid derivative or a borane derivative is the same as described above.

In one embodiment, X^{c4} is an alkylstannyl group (for example, a tributylstannyl group, a trimethylstannyl group, or a triethylstannyl group).

In one embodiment, X^{c4} is a copper atom. In one embodiment, X^{c4} is a copper carboxylate salt. In another embodiment, X^{c4} is a zinc atom.

In one embodiment, X^{c4} may be, for example, a bromine atom, an iodine atom, a trimethylsilyl group, a triethylsilyl group, or a tributylstannyl group, or may be a bromine atom, an iodine atom, a trimethylsilyl group, or a tributylstannyl group.

R^{c41} is a single bond, a methylene group, or an ethylene group.

R^{c42} is a hydrogen atom or a methyl group.

In one embodiment, the compound (C) is represented by the formula (c1).

In one embodiment, the compound (C) is represented by the formula (c2).

In one embodiment, the compound (C) is represented by the formula (c3).

In one embodiment, the compound (C) is represented by the formula (c4).

The amount of compound (C) added may be adjusted as appropriate depending on the structure and the like of the compound to be formed. For example, although there is no limitation, it is preferable to add 1 to 20 moles of the compound (C), and it is more preferable to add 1 to 10 moles of the compound (C), relative to 1 mole of the fluoropolyether group-containing compound (A).

### (Metal Catalyst)

The reaction in step (I) is carried out in the presence of a metal catalyst having at least one selected from Pd, Cu, Ni Pt, and Ag, preferably at least one selected from Pd and Cu. The metal catalyst may be a simple substance of the metal or may be a complex having a ligand. By using such a metal catalyst, the activity of an end of the fluoropolyether group-containing compound (A), the end contributing to the reaction, may be improved. In the fluoropolyether group-containing compound (A), X¹¹ and/or X¹² are directly bonded to the fluoropolyether group with relatively high electron withdrawing properties. It is important to perform the reaction in the presence of a metal catalyst as described above in order to cleave the bond between the fluoropolyether group and X¹¹ and/or X¹² in a fluoropolyether group-containing compound (A).

In one embodiment, a simple substance of the metal is used as the metal catalyst.

In one embodiment, a complex having a ligand is used as the metal catalyst. It is preferable that such a ligand is a phosphine atom-containing ligand, an olefin group-containing ligand, or a nitrogen atom-containing ligand.

Examples of the above ligand may include triphenylphosphine (that is, PPh₃), tri-t-butylphosphine (that is, P(t-Bu)₃), tri-n-butylphosphine (that is, P(n-Bu)₃), tri(ortho-tolyl)phosphine (that is, P(o-Tol)₃), (C₆F₅)₃P (that is, Tpfpp), (C₆F₅)₂PCH₂CH₂P (C₅F₅) ₂) (that is, Dfppe), 1,2-bis(diphenylphosphino)ethane (that is, dppe), 1,3-bis(diphenylphosphino)propane (that is, dppp), 1,1'-bis(diphenylphosphino)ferrocene (that is, dppf), (S)-2,2'-bis(diphenylphosphino)-1,1'-binaphthyl (that is, (S)-BINAP), 1,5-cyclooctadiene (that is, COD), bipyridine (that is, bpy), phenanthroline (that is, phen), or salts thereof.

In addition, the phosphine atom-containing ligands described in, for example, "Ruben Martin and Stephen L. Buchwald, 'Accounts of Chemical Research 2008', 2008, 41, 1461-1473" and "Surry, D. S., Buchwald, S. L., 'Angew. Chem. Int. Ed.', 2008, 47, 6338-6361" can also be utilized.

In one embodiment, examples of the above ligand may include Cl.

Examples of the above metal catalyst may include a Pd simple substance, Pd(dba)₃, a Cu simple substance, and Ni(COD)₂, and the above metal catalyst is preferably a Pd simple substance, Pd(dba)₃, or a Cu simple substance. Here, "dba" means dibenzylideneacetone.

In one embodiment, examples of the above metal catalyst may include a Pd simple substance, Pd(dba)₃, a Cu simple substance, Ni(COD)₂, and NiCl₂, and the above metal catalyst is preferably a Pd simple substance, Pd(dba)₃, a Cu simple substance, or NiCl₂. Here, "dba" means dibenzylideneacetone.

It is preferable that the above metal catalyst contains only a transition metal atom as the metal atom. The metal atom contained in the above metal catalyst may be selected from the group consisting of Pd, Cu, Ni, Pt, and Ag, or may be selected from the group consisting of Pd and Cu.

The metal catalyst may be included in an amount of 0.2 moles or more, 0.5 moles or more, 1 mole or more, 2 moles or more, or 3 moles or more relative to 1 mole of the fluoropolyether group-containing compound (A), for example. The metal catalyst may be included in an amount of 10 moles or less or 8 moles or less relative to 1 mole of the fluoropolyether group-containing compound (A), for example. The metal catalyst may be included in an amount of, for example, 0.2 to 10 moles, 0.5 to 10 moles, 1 to 10 moles, 2 to 10 moles, or 3 to 8 moles relative to 1 mole of the fluoropolyether group-containing compound (A), for example.

In one embodiment, when the metal catalyst is Cu, that metal catalyst may be included in an amount of 2 to 10 moles or 3 to 8 moles relative to the fluoropolyether group-containing compound (A).

In one embodiment, when the metal catalyst is Pd, that metal catalyst may be included in an amount of 1 to 10 moles or 3 to 8 moles relative to the fluoropolyether group-containing compound (A).

The above metal catalyst may be a metal catalyst precursor into which a ligand is introduced at the time of reaction. Examples of the metal catalyst precursor may include one having at least one selected from the group consisting of Pd, Pt, Cu, Ag Zn, and Mg. Examples of the ligand may include 2,2'-bipyridine and 1,10'-phenanthroline. That is, in the above step (I), there may be a compound that can function as the above ligand.

In step (I), the reaction is preferably carried out in a solvent.

As the above solvent, it is preferable to use a solvent that can dissolve the fluoropolyether group-containing compound (A) and the compound (C), and examples thereof may include a fluorinated solvent or a non-fluorinated solvent. These may be used alone as one type, or may be used in combination of two or more types.

The fluorinated solvent is a solvent containing one or more fluorine atoms. Examples of the fluorinated solvent may include a compound in which at least one of the hydrogen atoms of a hydrocarbon is replaced by a fluorine atom, such as a hydrofluorocarbon, a hydrochlorofluorocarbon, and a perfluorocarbon; and a hydrofluoroether. Here, the term "hydrocarbon" refers to a compound that contains only carbon and hydrogen atoms.

Examples of the hydrofluorocarbon (in other words, a compound in which some of the hydrogen atoms are substituted by fluorine atoms, but not by chlorine atoms) may include bis(trifluoromethyl)benzene, specifically 1,3-bis(trifluoromethyl)benzene (m-XHF), 1,1,1,2,2,3,3,4,4,5,5,6, 6-tridecafluorooctane, C₆F₁₃CH₂CH₃ (for example, Asahiklin (R) AC-6000 manufactured by Asahi Glass Co., Ltd.), and 1,1,2,2,3,3,4-heptafluorocyclopentane (for example, Zeorora (R) H manufactured by ZEON Corporation).

Examples of the hydrochlorofluorocarbon may include HCFC-225 (for example, Asahiklin AK-225 manufactured by AGC Inc.) and HFO-1233zd(Z) (for example, Celefin 1233Z manufactured by Central Glass Co., Ltd.).

Examples of the perfluorocarbon may include perfluorohexane, perfluoromethylcyclohexane, perfluoro-1,3-dimethylcyclohexane, and perfluorobenzene.

Examples of the hydrofluoroether may include an alkyl perfluoroalkyl ether (the perfluoroalkyl group and the alkyl group may be linear or branched) such as perfluoropropyl methyl ether (C₃F₇OCH₃) (for example, Novec (R) 7000 manufactured by Sumitomo 3M Limited), perfluorobutyl methyl ether (C₄F₉OCH₃) (for example, Novec (R) 7100 manufactured by Sumitomo 3M Limited), perfluorobutyl ethyl ether (C₄F₉OC₂H₅) (for example, Novec (R) 7200 manufactured by Sumitomo 3M Limited), and perfluorohexyl methyl ether (C₂F₅CF (OCH₃) C₃F₇) (for example, Novec (R) 7300 manufactured by Sumitomo 3M Limited); and CF₃CH₂OCF₂CHF₂ (for example, Asahiklin (R) AE-3000 manufactured by Asahi Glass Co., Ltd.).

Among the fluorinated solvents listed above, m-XHF, HFE7100, HFE7200, HFE7300, AC-6000, perfluorohexane, and perfluorobenzene are preferred.

Examples of the non-fluorinated solvent may include a S atom-containing solvent, an amide solvent, and a polyether solvent.

Examples of the S atom-containing solvent may include dimethyl sulfoxide, sulfolane, dimethyl sulfide, and carbon disulfide.

Examples of the amide solvent may include N-methylpyrrolidone, N,N-dimethylformamide, dimethylacetamide, and hexamethylphosphoric triamide.

Examples of the polyether solvent may include monoglyme and diglyme.

These solvents can be used alone or as a mixture of two or more types.

The solvent is preferably at least one selected from the group consisting of 1,1,1,2,2,3,3,4,4,5,5,6,6-tridecafluorooctane, 1,3-bis(trifluoromethyl)benzene, diglyme, and dimethyl sulfoxide, and it is more preferably at least one selected from the group consisting of 1,1,1,2,2,3,3,4,4,5,5,6,6-tridecafluorooctane, 1,3-bis(trifluoromethyl)benzene, and dimethyl sulfoxide. By using such a solvent, the fluoropolyether group-containing compound (A) and the compound (C) can be dissolved, and furthermore, the activity of the fluoropolyether group-containing compound (A) can be improved.

In one embodiment, when Cu is used as the metal catalyst, it is preferable to use dimethyl sulfoxide as the solvent. The present embodiment is advantageous in that it acts on the halogen atom present at an end of the fluoropolyether group-containing compound (A) (that is, X¹¹ and/or X¹² in the formula (1)) in step (I) and facilitates insertion of the metal catalyst.

In one embodiment, when Pd or a complex containing Pd is used as the metal catalyst, it is preferable to use a fluorinated solvent, for example, 1,1,1,2,2,3,3,4,4,5,5,6,6-tridecafluorooctane as the solvent. The present embodiment is advantageous in that the fluoropolyether group-containing compound (A), the compound (C), and the metal catalyst can be dissolved particularly well from a relatively low temperature (for example, ordinary temperature) in step (I).

The amount of solvent may be set as appropriate, but for example, it may be added in an amount of 0.1 to 10.0 parts by mass or may be added in an amount of 0.5 to 3.0 parts by mass relative to the fluoropolyether group-containing compound (A).

The reaction temperature of step (I) is not limited, and the reaction may be carried out at 60 to 200°C, 80 to 180°C, or 100 to 160°C, for example.

In step (I), an additional compound may be further added as required. Examples of the additional compound may include a base and a reoxidant.

For example, Cs₂CO₃, Na₂CO₃, K₂CO₃, and the like can be used as the base. The amount of base added is not limited, but for example, it may be added in an amount of 1 to 5 moles relative to 1 mole of the fluoropolyether group-containing compound (A).

The type of reoxidant can be selected as appropriate depending on the compounds to be used and other factors. Examples of the reoxidant may include oxygen, tert-butyl hydroperoxide, N-methylmorpholine, and N-oxide.

### (Fluoropolyether Group-Containing Compound (B))

By carrying out step (I), the fluoropolyether group-containing compound (A) is reacted with the compound (C). That is, a structure derived from the compound (C) is introduced into the fluoropolyether group-containing compound (A) to form a fluoropolyether group-containing compound (B). For example, the fluoropolyether group-containing compound (B) may be represented by the following formula (b11), (b12), (b21), (b22), (b31), (b32), (b41), or (b42):

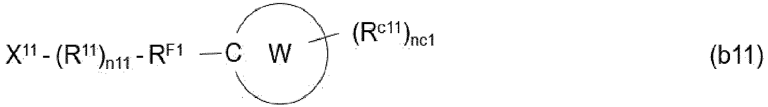

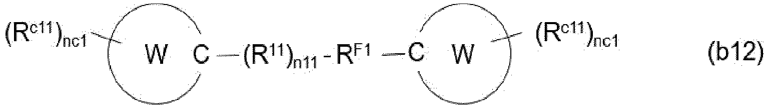

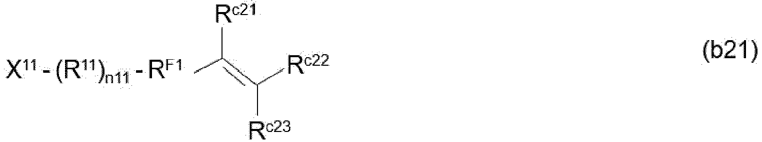

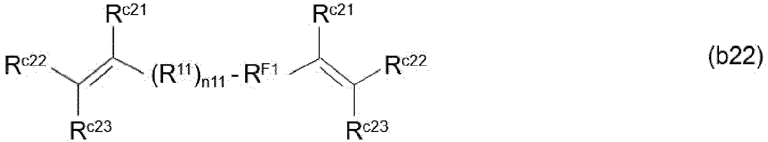

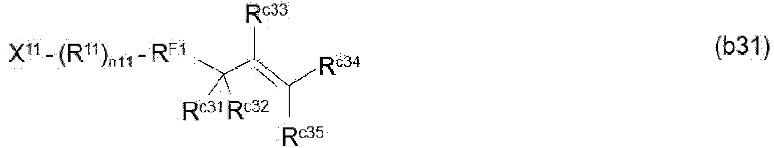

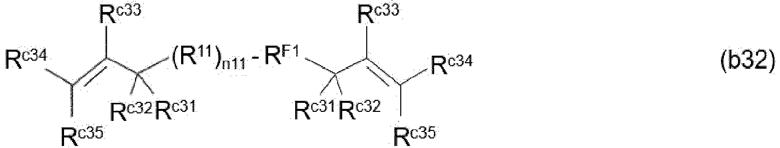

X¹¹ - (R11₎ₙ₁₁ - R^{F1} -R^{c41}-C≡C-R^{c42} (b41)

R^{c42}-C≡C-R^{c41-}(R¹¹)ₙ₁₁- R^{F1}-R^{c41}-C≡C-R^{c42} (b42)

In the above formula (b11), formula (b21), formula (b31), and formula (b41),
X¹¹ is each independently a fluorine atom, a chlorine atom, or a hydrogen atom, and preferably a fluorine atom or a hydrogen atom;
R¹¹ is each independently a C₁₋₁₆ alkylene group optionally substituted with one or more fluorine atoms, preferably a C₁₋₁₆ perfluoroalkylene group, and more preferably a linear C₁₋₆ perfluoroalkylene group, in particular a linear C₁₋₃ perfluoroalkylene group;
n11 is each independently 0 or 1;
R^{F1} is each independently a group represented by the following formula:

   - (OC₆F₁₂) ₐ₁- (OC₅F₁₀) _{b1}- (OC₄F₈) _{c1}- (OC₃R^{Fa}₆) _{d1}- (OC₂F₄) ₑ₁- (OCF₂) _{f1}-;
a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula;
R^{Fa} is each independently at each occurrence a hydrogen atom, a fluorine atom, or a chlorine atom;
W is each independently a structure having an aromatic ring, for example, a ring is constituted by five to six atoms;
R^{c11} is a substituent bonded to an atom constituting the ring of W and is each independently a fluorine atom, a chlorine atom, a bromine atom, an iodine atom, -NO₂, -OH, -NH₂, -PO(OH)₂, -PH₂O₂, -O-P (=O) (OH) ₂, -SH, -SOOH, -SeH, or a monovalent organic group, and preferably a fluorine atom, a chlorine atom, -NO₂, -OH, -NH₂, -PO(OH)₂, a C₁₋₂₀ alkyl group (for example, a methyl group or a t-butyl group), a phenyl group, a C₁₋₂₀ alkoxy group, a group represented by -OR^{c10}, -NR^{c12}R^{c13}, -SR^{c14}, -COOR^{c15}, -COR^{c16}, -CR^{c17}=C (R^{c18}) ₂, -C (R^{c20}) ₂CR^{c17}=C (R^{c18}) ₂, -PO (OR^{c19}) ₂, -PO(OR^{c19})₂, -P (R^{c19'}) ₂O₂, or -O-P (=0) (OR^{c19"})₂;
R^{c10} is a monovalent organic group containing at least one O atom or S atom and containing 2 to 10 carbon atoms, and examples of the monovalent organic group in R^{c10} may include -CH₂OCH₃, -CH₂OCH₂CH₂OCH₃, -CH (CH₃) OCH₂CH₃, -CH₂OC₆H₅ (here, C₆H₅ is a benzene ring), -C₅H₉O (here, C₅H₉O is a tetrahydropyranyl group), and -CH₂SCH₃;
R^{c12} to R^{c13} are each independently a hydrogen atom or a C₁₋₂₀ alkyl group, provided that either one of them is a C₁₋₂₀ alkyl group;
R^{c14} is a C₁₋₂₀ alkyl group;
R^{c15} to R^{c18} and R^{c20} are each independently a hydrogen atom or a C₁₋₂₀ alkyl group;
R^{c19} is each independently a hydrogen atom or a C₁₋₂₀ alkyl group, provided that either one of R^{c19} is a C₁₋₂₀ alkyl group;
R^{c19'} is each independently a hydrogen atom or a C₁₋₂₀ alkyl group, provided that either one of R^{c19'} is a C₁₋₂₀ alkyl group;
R^{c19"} is each independently a hydrogen atom or a C₁₋₂₀ alkyl group, provided that either one of R^{c19"}is a C₁₋₂₀ alkyl group;
nc1 is each independently an integer of 0 or more and less than the number of atoms consisting the ring of W, and is, for example, nc is an integer of 0 to 2 (for example, it may be 0, may be 1, or may be 2);
R^{c21}, R^{c22}, and R^{c23} are each independently a hydrogen atom, a halogen atom, or a C₁₋₆ alkyl group;
R^{c31}, R^{c32}, R^{c33}, R^{c34}, and R^{c35} are each independently a hydrogen atom, a halogen atom, or a C₁₋₆ alkyl group;
R^{c41} is a single bond, a methylene group, or an ethylene group; and
R^{c42} is a hydrogen atom or a methyl group.

In the above formula (b12) , formula (b22), formula (b32), and formula (b42),
R¹¹ is each independently, preferably a C₁₋₆ alkylene group optionally substituted with one or more fluorine atoms, in particular C₁₋₃ perfluoroalkylene group, and more preferably a linear C₁₋₆ perfluoroalkylene group, in particular a linear C₁₋₃ perfluoroalkylene group;
n11 is each independently 0 or 1, and preferably 1;
R^{F1} is each independently a group represented by the following formula:

   - (OC₆F₁₂)ₐ₁- (OC₅F₁₀) _{b1}- (OC₄F₈) _{c1}- (OC₃R^{Fa}₆) _{d1}- (OC₂F₄) ₑ₁- (OCF₂)_{f1}-;
a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula;
R^{Fa} is each independently at each occurrence a hydrogen atom, a fluorine atom, or a chlorine atom;
W is each independently at each occurrence a structure having an aromatic ring, for example, a ring constituted by five to six atoms;
R^{c11} is a substituent bonded to an atom constituting the ring of W and is each independently at each occurrence a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, or a monovalent organic group, and preferably a fluorine atom, a chlorine atom, -NO₂, -OH, -NH₂, -PO(OH)₂, a C₁₋₂₀ alkyl group (for example, a methyl group or a t-butyl group), a phenyl group, a C₁₋₂₀ alkoxy group, a group represented by -OR^{c10}, -NR^{c12}R^{c13}, -SR^{c14}, -COOR^{c15}, -COR^{c16}, -CR^{c17}=C (R^{c18})₂, -C (R^{c20})₂CR^{c17}=C (R^{c18})₂, -PO(OR^{c19})₂, -PO (OR^{c19}) ₂, -P (R^{c19'})₂O₂, or -O-P (=0) (OR^{c19"})₂;
R^{c10} is a monovalent organic group containing at least one O atom or S atom, and containing 2 to 10 carbon atoms, and examples of the monovalent organic group in R^{c10} may include -CH₂OCH₃, -CH₂OCH₂CH₂OCH₃, -CH (CH₃) OCH₂CH₃, -CH₂OC₆H₅ (here, C₆H₅ is a benzene ring), -C₅H₉O (here, C₅H₉O is a tetrahydropyranyl group), and -CH₂SCH₃;
R^{c12} to R^{c13} are each independently a hydrogen atom or a C₁₋₂₀ alkyl group, provided that either one of them is a C₁₋₂₀ alkyl group;
R^{c14} is a C₁₋₂₀ alkyl group;
R^{c15} to R^{c18} and R^{c20} are each independently a hydrogen atom or a C₁₋₂₀ alkyl group;
R^{c19} is each independently a hydrogen atom or a C₁₋₂₀ alkyl group, provided that either one of R^{c19} is a C₁₋₂₀ alkyl group;
R^{c19'} is each independently a hydrogen atom or a C₁₋₂₀ alkyl group, provided that either one of R^{c19'} is a C₁₋₂₀ alkyl group;
R^{c19"} is each independently a hydrogen atom or a C₁₋₂₀ alkyl group, provided that either one of R^{c19"} is a C₁₋₂₀ alkyl group;
nc1 is each independently at each occurrence an integer of 0 or more and less than the number of atoms consisting the ring of W, and is, for example, an integer of 0 to 2 (for example, it may be 0, may be 1, or may be 2) ;
R^{c21}, R^{c22}, and R^{c23} are each independently at each occurrence a hydrogen atom, a halogen atom, or a C₁₋₆ alkyl group;
R^{c31}, R^{c32}, R^{c33}, R^{c34}, and R^{c35} are each independently at each occurrence a hydrogen atom, a halogen atom, or a C₁₋₆ alkyl group;
R^{c41} is a single bond, a methylene group, or an ethylene group; and
R^{c42} is a hydrogen atom or a methyl group.

In the above formulae (b11), (b12) , (b21), (b22), (b31), (b32), (b41), and (b42),
in one embodiment, R^{c11} is a fluorine atom, a chlorine atom, a bromine atom, -NO₂, -OH, -NH₂, -PO(OH)₂, a C₁₋₂₀ alkyl group (for example, a methyl group or a t-butyl group), a phenyl group, a C₁₋₂₀ alkoxy group, a group represented by -OR^{c10}, -NR^{c12}R^{c13}, -SR^{c14}, -COOR^{c15}, -COR^{c16}, -CR^{c17}=C (R^{c18}) ₂, -C (R^{c20}) ₂CR^{c17}=C (R^{c18}) ₂, -PO (OR^{c19}) ₂, - PO(OR^{c19})₂, -P(R^{c19'})₂O₂, or -O-P(=O) (OR^{c19"})₂.

In the above formulae (b11), (b12) , (b21), (b22), (b31), (b32), (b41), and (b42),
in one embodiment, R^{c19} is each independently a C₁₋₂₀ alkyl group.

In the above embodiment, R^{F1} is preferably a group represented by the above formula (f1). That is, the fluoropolyether group-containing compound (B) is represented by the formula (b11), (b12), (b21), (b22), (b31), (b32), (b41), or (b42);
R^{F1} is represented by the following formula:

   -(OC₃F₆)_{d1}- (OC₂F₄)ₑ₁- (f1)

   wherein
(OC₃F₆) may be linear or have a branched chain, and for example, it is linear, or in another example, it is a branched chain;
d1 is an integer of 3 to 200, preferably an integer of 5 to 100, and more preferably an integer of 10 to 80;
e1 is 1; and
the other symbols are each the same as defined above.

In one embodiment, the fluoropolyether group-containing compound (B) is represented by the formula (b11) .

In one embodiment, the fluoropolyether group-containing compound (B) is represented by the formula (b12) .

In one embodiment, the fluoropolyether group-containing compound (B) is represented by the formula (b21) .

In one embodiment, the fluoropolyether group-containing compound (B) is represented by the formula (b22) .

In one embodiment, the fluoropolyether group-containing compound (B) is represented by the formula (b31) .

In one embodiment, the fluoropolyether group-containing compound (B) is represented by the formula (b32) .

In one embodiment, the fluoropolyether group-containing compound (B) is represented by the formula (b41) .

In one embodiment, the fluoropolyether group-containing compound (B) is represented by the formula (b42) .

The production method of the present disclosure may further comprise concentrating, purifying, drying, or the like the reaction product obtained in step (I).

As the method for concentrating the reaction product, any method that may be normally carried out can be used. Examples of the concentration method may include concentration using membrane filtration, concentration using centrifugation, and evaporative concentration.

As the purification method, any method that may be normally carried out can be used. Examples of the purification method may include ultrafiltration, purification using chromatography, solvent extraction, distillation, recrystallization, and a combination thereof.

As the drying method, any method that may be normally carried out can be used. As the drying method, for example, after adding a drying agent such as magnesium sulfate, hydrate of sodium sulfate (mirabilite), or molecular sieves, the drying agent may be filtered out to obtain a solution containing the reaction product as the filtrate, and then the solution may be concentrated.

The production method of the present disclosure may be provided with a fluorination step after step (I).

In one embodiment, after step (I), a step of forming yet another group at an end of the fluoropolyether group-containing compound (B) can be provided.

Examples of another group may include a group containing a Si atom bonded to a hydrolyzable group. A compound obtained by introducing such a group containing a Si atom may be usefully used as, for example, a surface-treating agent that may be used for surface treatment of substrates.

### (Composition)

Hereinafter, in one aspect of the present disclosure, a composition will be described.

The composition of the present disclosure comprises a fluoropolyether group-containing compound (B).

In one embodiment, the composition of the present disclosure comprises, as the fluoropolyether group-containing compound (B), only a fluoropolyether group-containing compound (hereinafter, a fluoropolyether group-containing compound (B1)) obtained by reaction with the compound (C) at only one of either X¹¹ or X¹² of the fluoropolyether group-containing compound (A). The fluoropolyether group-containing compound (B1) is, for example, a compound represented by the formula (b11), (b21), (b31), or (b41).

In one embodiment, the composition of the present disclosure comprises, as the fluoropolyether group-containing compound (B), only a fluoropolyether group-containing compound (hereinafter, a fluoropolyether group-containing compound (B2)) obtained by reaction with the compound (C) at both X¹¹ and X¹² of the fluoropolyether group-containing compound (A). The fluoropolyether group-containing compound (B2) is, for example, a compound represented by the formula (b12), (b22), (b32), or (b42).

In one embodiment, the composition of the present disclosure comprises the above fluoropolyether group-containing compound (B1) and the above fluoropolyether group-containing compound (B2).

In the present embodiment, relative to the total of the above fluoropolyether group-containing compound (B1) and the above fluoropolyether group-containing compound (B2), the compound (B2) is preferably 0.1 mol% or more and 35 mol% or less. The lower limit of the content of compound (B2) relative to the total of the compound (B1) and the compound (B2) may be preferably 0.1 mol%, more preferably 0.2 mol%, still more preferably 0.5 mol%, even more preferably 1 mol%, particularly preferably 2 mol%, and especially 5 mol%. The upper limit of the content of compound (B2) relative to the total of the compound (B1) and the compound (B2) may be preferably 35 mol%, more preferably 30 mol%, still more preferably 20 mol%, and even more preferably 15 mol% or 10 mol%. Relative to the total of the compound (B1) and the compound (B2), the compound (B2) is preferably 0.1 mol% or more and 30 mol% or less, more preferably 0.1 mol% or more and 20 mol% or less, still more preferably 0.2 mol% or more and 10 mol% or less, even more preferably 0.5 mol% or more and 10 mol% or less, and particularly preferably 1 mol% or more and 10 mol% or less, for example, 2 mol% or more and 10 mol% or less, or 5 mol% or more and 10 mol% or less.

The composition of the present disclosure may further comprise an additional component. Examples of the additional component may include a solvent, a pH adjuster, a (non-reactive) silicone compound that may be understood as a silicone oil (hereinafter, referred to as a "silicone oil"), and a catalyst.

The composition of the present disclosure can further have a fluoropolyether group-containing silane compound having a fluoropolyether group in the molecular backbone and a hydrolyzable group bonded to a Si atom at a molecular terminal or in a terminal part. Examples of such a silane compound may include compounds described in JP 2016-138240 A, JP 2014-218639 A, JP 2017-082194 A, and the like.

The composition of the present disclosure may be used as a surface-treating agent, a non-reactive fluoropolyether group-containing compound (for example, a compound referred to as a "fluorine-containing oil"), an additive such as a (non-reactive) silicone compound that may be understood as a silicone oil (for example, a compound referred to as a "silicone oil"), a raw material for greases, a sealant, or a monomer for resins.

While the embodiments have been described above, it will be understood that a wide variety of modifications in form and details can be made without departing from the spirit and scope of the claims.

### Examples

The present disclosure will be described more specifically through the following Examples, but it is not limited to these Examples. Note that, in the present Examples, the occurrence order of the repeating units constituting fluoropolyether is not limited.

### (Example 1) Reaction using Cu

Under an argon atmosphere, 0.51 g of F (CF₂CF₂CF₂O) ₙCF₂CF₂-I (n = 29, weight average molecular weight (Mw) of 5,100), 55 mg of metallic copper, 1.0 mL of dimethyl sulfoxide, and 55 µL of iodobenzene were introduced into a flask. Note that the weight average molecular weight is a value determined by ¹⁹F NMR.

The reaction solution was stirred at 150°C for 16 hours and then cooled to room temperature. The obtained reaction solution was passed through silica gel column chromatography. Volatiles were distilled off, and when analyzed using ¹⁹F NMR, a compound (1) was obtained with a yield of 88%.

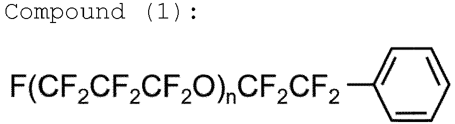

Results of NMR analysis on compound (1):
¹H NMR (D₂O): δ 7.22 to 7.36 (m, 5H, Ar-H);
¹⁹F NMR (D₂O, C₆F₆; δ -163) : δ -80.57 (t, J = 7.57 Hz, 3F, CF₃CF₂CF₂O), -81.10 to -81.70 (m, 4nF, (CF₂CF₂CF₂O)ₙ), -82.25 (m, 2F, CF₂CF₂CF₂0CF₂CF₂Ar), -82.70 to -82.80 (m, 2F, CF₃CF₂CF₂O-), -85.67 (t, J = 13.41 Hz, 2F, -CF₂CF₂Ar), -114.12 (s, 2F, CF₂CF₂Ar), -127.70 to -128.00 (m, 2nF, -(CF₂CF₂CF₂O)ₙ-), -128.68 (s, 2F, CF₃CF₂CF₂O-) .

### (Example 2) Reaction using Pd

0. 50 g of F(CF₂CF₂CF₂O) ₙCF₂CF₂-I (n = 22, Mw of 4,000), 157 mg of 1,1'-bis(diphenylphosphino)ferrocene, 5.7 mg of tris(dibenzylideneacetone) (chloroform)dipalladium(0) (that is, Pd₂ (dba)₃·CHCl₃), 806 mg of cesium carbonate, 1.0 mL of benzene, and 1.0 mL of AC-6000 were introduced into a pressure resistant tube, and the inside of the pressure resistant tube was substituted with argon.

This reaction solution was stirred at 120°C for 24 hours and then cooled to room temperature. The resulting reaction solution was passed through column chromatography using silica gel. Thereafter, volatiles were distilled off and measurement was performed using ¹⁹F NMR. The target compound (1') was obtained with a yield of 83%.

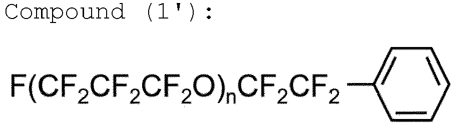

Results of NMR analysis on compound (1'):
¹H NMR (D₂O): δ 7.22 to 7.36 (m, 5H, Ar-H);
¹⁹F NMR (D₂O, C₆F₆; δ -163) : δ -80.57 (t, J = 7.57 Hz, 3F, CF₃CF₂CF₂O), -81.10 to -81.70 (m, 4nF, (CF₂CF₂CF₂O)ₙ), -82.25 (m, 2F, CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -114.12 (s, 2F, CF₂CF₂Ar), -127.70 to -128.00 (m, 2nF, -(CF₂CF₂CF₂O)ₙ-), -128.68 (s, 2F, CF₃CF₂CF₂O-).

### (Example 3)

The reaction was carried out under the same conditions as in Example 2 except that 1-methylpyrrole was used instead of benzene, and a compound (2) was obtained with a yield of 88%.

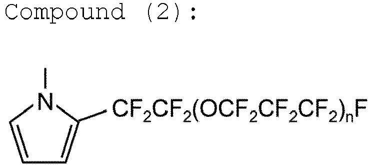

Results of NMR analysis on compound (2):
¹H NMR (D₂O) : δ 3.55 (s, 3H, N-CH₃), 5.73 (t, J = 3.18, Het-H), 6.09 (m, Het-H), 6.41 (s, Het-H);
¹⁹F NMR (D₂O, C₆F₆ ; δ -163): δ -80.57 (t, J = 7.57, 3F, CF₃CF₂CF₂O-), -81.10 to -81.70 (m, 4nF, - (CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -105.47 (s, 2F, -CF₂CF₂-Ar), -127.70 to -128.15 (m, 2nF, - (CF₂CF₂CF₂O)ₙ-), -128.68 (s, 2F, CF₃CF₂CF₂O-)

### (Example 4)

The reaction was carried out under the same conditions as in Example 2 except that allylbenzene was used instead of benzene, and a compound (3) was obtained with a yield of 6%.

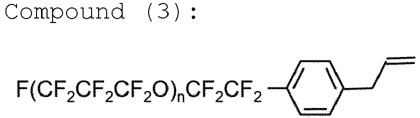

Results of NMR analysis on compound (3):
¹H NMR (D₂O): δ 3.33 (d, J = 5.28, 1H, Ar-CH₂-CH=CH₂), 5.37 to 5.52 (m, 2H, Ar-CH₂-CH=CH₂), 6.36 to 6.43 (m, 1H, Ar-CH₂-CH=CH₂) , 6.71 to 6.92 (m, 4H, Ar-H) ;
¹⁹F NMR (D₂O, C₆F₆;): δ-80.57 (t, J = 7.57, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -114.99 (d, J = 12.20, 2F, -CF₂CF₂-Ar), -127.70 to -128.15 (m, 2nF, -(CF₂CF₂CF₂O)ₙ-), -128.68 (s, 2F, CF₃CF₂CF₂O-)

### (Example 5)

The reaction was carried out under the same conditions as in Example 1 except that 4-iodotoluene was used instead of iodobenzene, and a compound (4) was obtained with a yield of 68%.

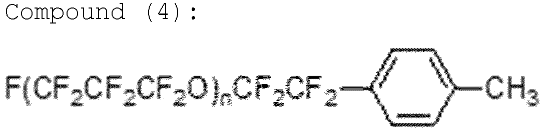

Results of NMR analysis on compound (4):
¹H NMR (D₂O) δ 2.23 (s, 3H, -Ar-CH₃), 7.05 (d, J = 8.04 Hz, 2H, Ar-H), 7.13 (d, J=8.08 Hz, 2H, Ar-H);
¹⁹F NMR (D₂O; δ -163) δ -80.54 (t, J = 7.57 Hz, 3F, CF₃CF₂CF₂O-), -81.10 to -81.70 (m, 4nF, -(CF₂CF₂CF₂O)ₙ-), -82.15 to -82.40 (m, 2F, -CF₂CF₂CF₂OCF₂CF₂Ar), -82.70 to -82.80 (m, 2F, CF₃CF₂CF₂O-), -85.62 (t, J = 13.41 Hz, 2F, -CF₂CF₂Ar), -113.59 (s, 2F, -CF₂CF₂-Ar), -127.70 to -128.15 (m, 2nF, -(CF₂CF₂CF₂O)ₙ-), -128.68 (s 2F, CF₃CF₂CF₂O-) .

### (Example 6)

The reaction was carried out under the same conditions as in Example 1 except that 4-iodoanisole was used instead of iodobenzene, and a compound (5) was obtained with a yield of 70%.

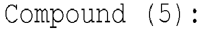

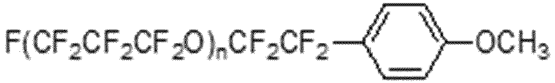

Results of NMR analysis on compound (5):
¹H NMR (D₂O) δ 3.66 (s, 3H, -Ar-OCH₃), 6.62 (d, J=8.80 Hz, 2H, Ar-H), 7.16 (d, J = 8.80 Hz, 2H, Ar-H);
¹⁹F NMR (D₂O, C₆F₆ ; δ -163) δ -80.54 (t, J = 8.04 Hz, 3F, CF₃CF₂CF₂O-), -81.44 to -81.70 (m, 4nF, -(CF₂CF₂CF₂O)ₙ-), -82.74 (m, 2F, -CF₂CF₂CF₂OCF₂CF₂Ar), , -85.69 (t, J = 13.41 Hz, 2F, -CF₂CF₂Ar), -86.12 (s, 2F, CF₃CF₂CF₂O-), -114.05 (s, 2F, -CF₂CF₂-Ar), -127.45 to -128.16 (m, 2nF, -(CF₂CF₂CF₂O)ₙ-), -128.69 (s 2F, CF₃CF₂CF₂O-).

### (Example 7)

The reaction was carried out under the same conditions as in Example 1 except that 1-chloro-4-iodobenzene was used instead of iodobenzene, and a compound (6) was obtained with a yield of 76%.

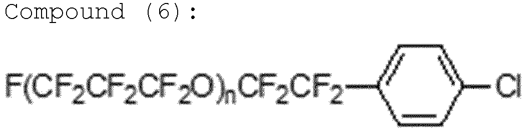

Results of NMR analysis on compound (6):
¹H NMR (D₂O) δ 7.34 (d, J = 8.48Hz, 2H, Ar-H), 7.22 (d, J = 8.48 Hz, 2H, Ar-H);
¹⁹F NMR (D₂O, C₆F₆ ; δ -163) δ -80.53 (t, J = 8.10 Hz, 3F, CF₃CF₂CF₂O-), -82.17 to -82.76 (m, 4nF, -(CF₂CF₂CF₂O)ₙ-), -83.80 (m, 2F, -CF₂CF₂CF₂OCF₂CF₂Ar), -113.87 (s, 2F, -CF₂CF₂-Ar), -127.42 to -128.13 (m, 2nF, -(CF₂CF₂CF₂O)ₙ-), -128.66 (s 2F, CF₃CF₂CF₂O-) .

### (Example 8)

The reaction was carried out under the same conditions as in Example 1 except that 1-chloro-3-iodobenzene was used instead of iodobenzene, and a compound (7) was obtained with a yield of 56%.

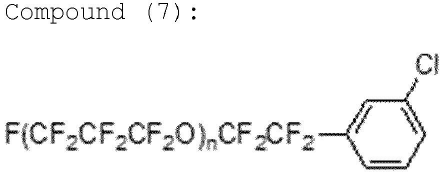

Results of NMR analysis on compound (7):
¹H NMR(D₂O) δ 7.27 to 7.31 (m, 4H, Ar-H);
¹⁹F NMR (D₂O, C₆F₆ ; δ -163) δ -80.55 (t, J = 8.12 Hz, 3F, CF₃CF₂CF₂O-), -81.69 to -82.78 (m, 4nF, -(CF₂CF₂CF₂O)ₙ-), -83.80 (m, 2F, -CF₂CF₂CF₂OCF₂CF₂Ar), -114.09 (s, 2F, -CF₂CF₂-Ar), -127.43 to -128.15 (m, 2nF, -(CF₂CF₂CF₂O)ₙ-), -128.68 (s 2F, CF₃CF₂CF₂O-) .

### (Example 9)

The reaction was carried out under the same conditions as in Example 1 except that 1-chloro-2-iodobenzene was used instead of iodobenzene, and a compound (8) was obtained with a yield of 27%.

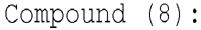

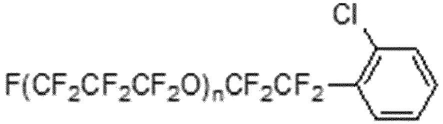

Results of NMR analysis on compound (8):
¹H NMR (D₂O) δ 7.23 to 7.39 (m, 4H, Ar-H);
¹⁹F NMR (D₂O, C₆F₆ ; δ -163) δ -80.53 (t, J = 8.10 Hz, 3F, CF₃CF₂CF₂O-), -81.67 to -82.79 (m, 4nF, -(CF₂CF₂CF₂O)ₙ-), -83.80 (m, 2F, -CF₂CF₂CF₂OCF₂CF₂Ar), -109.69 (s, 2F, -CF₂CF₂-Ar), -127.42 to -128.13 (m, 2nF, -(CF₂CF₂CF₂O)ₙ-), -128.66 (s 2F, CF₃CF₂CF₂O-) .

### (Example 10)

The reaction was carried out under the same conditions as in Example 1 except that 2-iodoanisole was used instead of iodobenzene, and a compound (9) was obtained with a yield of 93%.

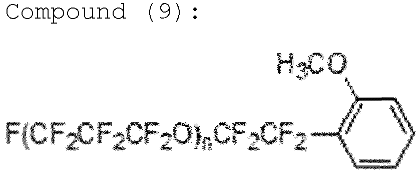

Results of NMR analysis on compound (9):
¹H NMR (D₂O) δ 3.71 (s, 3H, -OCH₃), 6.73 (t, J = 7.60 Hz, Ar-H), 6.78 (d, J = 8.40 Hz, Ar-H), 7.12 (dd, J = 9.28, 1.44 Hz, Ar-H), (t, J = 7.60 Hz, Ar-H);
¹⁹F NMR (D₂O, C₆F₆ ; δ -163) δ -80.59 (t, J = 8.00 Hz, 3F, CF₃CF₂CF₂O-), -81.77 to -82.85 (m, 4nF, -(CF₂CF₂CF₂O)ₙ-), -83.91 (m, 2F, -CF₂CF₂CF₂OCF₂CF₂Ar), -110.77 (m, 2F, -CF₂CF₂-Ar), -127.75 to -127.85 (m, 2nF, -(CF₂CF₂CF₂O)ₙ-), -128.75 (s 2F, CF₃CF₂CF₂O-) .

### (Example 11)

The reaction was carried out under the same conditions as in Example 1 except that 4-iodothioanisole was used instead of iodobenzene, and a compound (10) was obtained with a yield of 53%.

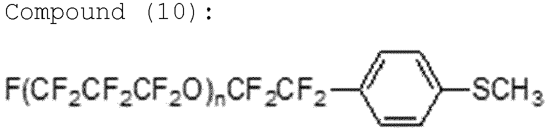

Results of NMR analysis on compound (10):
¹H NMR (D₂O) : δ 2.27 (s, 3H, -S-CH₃), 6.93 (d, J = 8.44 Hz, 2H, Ar-H), 7.17 (d, J = 8.44 Hz, 2H, Ar-H);
¹⁹F NMR (D₂O, C₆F₆; δ -163) : δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -113.84 (d, J = 114.39 Hz, 2F, -CF₂CF₂Ar), -127.70 to -128.15 (m, 2nF, -(CF₂CF₂CF₂O)ₙ-), -128.68 (s, 2F, CF₃CF₂CF₂O-) .

### (Example 12)

The reaction was carried out under the same conditions as in Example 1 except that methyl 4-iodobenzoate was used instead of iodobenzene, and a compound (11) was obtained with a yield of 69%.

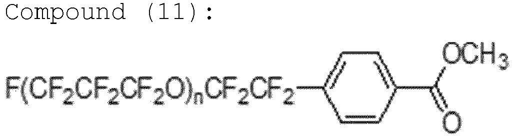

Results of NMR analysis on compound (11):
¹H NMR (D₂O) : δ 3.70 (s, 3H, -Ar-COOCH₃), 7.46 (d, J = 8.36 Hz, 2H, Ar-H), 7.78 (d, J = 8.28 Hz, 2H, Ar-H);
¹⁹F NMR (D₂O, C₆F₆; δ -163) : δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -114.21 (s, 2F, -CF₂CF₂Ar), -127.70 to -128.15 (m, 2nF, -(CF₂CF₂CF₂O)ₙ-), -128.68 (s, 2F, CF₃CF₂CF₂O-).

### (Example 13)

The reaction was carried out under the same conditions as in Example 1 except that 4-iodoacetophenone was used instead of iodobenzene, and a compound (12) was obtained with a yield of 30%.

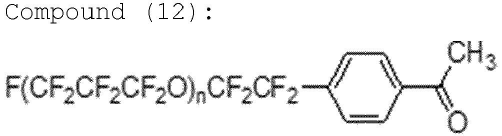

Results of NMR analysis on compound (12):
¹H NMR (D₂O) : δ 2.21 (s, 3H,-Ar-COCH₃), 7.64 (d, J = 8.28 Hz, 2H, Ar-H), 8.00 (d, J = 8.60 Hz, 2H, Ar-H);
¹⁹F NMR (D₂O, C₆F₆; δ -163) : δ -80.57 (t, J = 7.57, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -114.48 (d, J = 83.77 Hz, 2F, -CF₂CF₂Ar), -127.70 to -128.15 (m, 2nF, -(CF₂CF₂CF₂O)ₙ-), -128.68 (s, 2F, CF₃CF₂CF₂O-) .

### (Example 14)

The reaction was carried out under the same conditions as in Example 2 except that N,N'-dimethylaniline was used instead of benzene, and compounds (13-1), (13-2), and (13-3) were obtained with yields of 49%, 9%, and 4%, respectively.

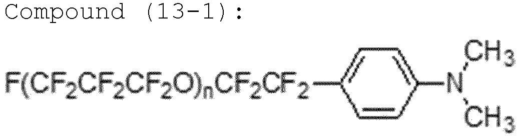

Results of NMR analysis on compound (13-1):
¹H NMR (D₂O) : δ 2.86 (s, 6H, -N-(CH₃)₂), 6.25 to 6.50 (m, 2H, Ar-H), 6.85 to 7.30 (m, 2H, Ar-H);
¹⁹F NMR (D₂O, C₆F₆; δ -163) : δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -112.37 (s, 2F, -CF₂CF₂Ar), -127.70 to -128.15 (m, 2nF, -(CF₂CF₂CF₂O)ₙ-), -128.68 (s, 2F, CF₃CF₂CF₂O-).

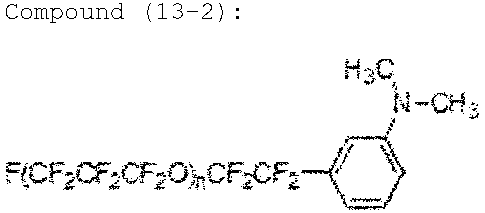

Results of NMR analysis on compound (13-2):
¹H NMR (D₂O) : δ 2.86 (s, 6H, -N-(CH₃)₂), 6.25 to 6.50 (m, 2H, Ar-H), 6.85 to 7.30 (m, 2H, Ar-H);
¹⁹F NMR (D₂O, C₆F₆; δ -163) : δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -113.70 (s, 2F, -CF₂CF₂Ar), -127.70 to -128.15 (m, 2nF, -(CF₂CF₂CF₂O)ₙ-), -128.68 (s, 2F, CF₃CF₂CF₂O-) .

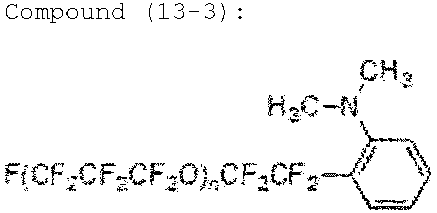

Results of NMR analysis on compound (13-3):
¹H NMR (D₂O) : δ 2.86 (s, 6H, -N-(CH₃)₂), 6.25 to 6.50 (m, 2H, Ar-H), 6.85 to 7.30 (m, 2H, Ar-H);
¹⁹F NMR (D₂O, C₆F₆; δ -163) : δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -106.80 (s, 2F, -CF₂CF₂Ar), -127.70 to -128.15 (m, 2nF, -(CF₂CF₂CF₂O)ₙ-), -128.68 (s, 2F, CF₃CF₂CF₂O-) .

### (Example 15)

The reaction was carried out under the same conditions as in Example 1 except that 1-tert-butyl-4-iodobenzene was used instead of iodobenzene, and a compound (14) was obtained with a yield of 82%.

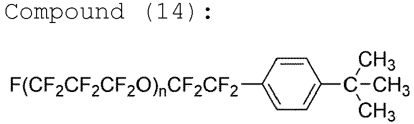

Results of NMR analysis on compound (14):
¹H NMR (D₂O) : δ 1.17 (s, 9H, -Ar-C(CH₃)₃), 7.18 (d, J = 10.28 Hz, 2H, Ar-H) , 7.34 (d, J = 8.08 Hz, 2H, Ar-H) ;
¹⁹F NMR (D₂O, C₆F₆ ;δ -163): δ - 80.54 (t, J = 7.57, 3F, CF₃CF₂CF₂O-), -81.30 to -82.40 (m, 4nF, -(CF₂CF₂CF₂O)ₙ-), -82.75 (m, 2F, -CF₂CF₂CF₂OCF₂CF₂Ar), -83.79 to -83.86 (m, 2F, CF₃CF₂CF₂O-), -85.67 (t, J = 13.41 Hz, 2F, -CF₂CF₂Ar), -113.91 (s, 2F, -CF₂CF₂Ar), -127.70 to -128.15(m, 2nF, -(CF₂CF₂CF₂O)ₙ-), -128.68 (s, 2F, CF₃CF₂CF₂O-) .

### (Example 16)

The reaction was carried out under the same conditions as in Example 1 except that 4-iodobiphenyl was used instead of iodobenzene, and a compound (15) was obtained with a yield of 76%.

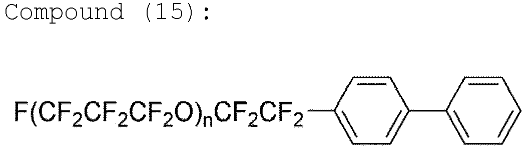

Results of NMR analysis on compound (15):
¹H NMR (D₂O): δ 7.02 to 7.69 (m, Ar-H);
¹⁹F NMR (D₂O, C₆F₆ ; δ -163): δ - 80.51 (t, J = 7.57, 3F, CF₃CF₂CF₂O-), -81.10 to -81.70 (m, 4nF, -(CF₂CF₂CF₂O)ₙ-), -82.15 (m, 2F, -CF₂CF₂CF₂OCF₂CF₂Ar), -82.70 to -82.80 (m, 2F, CF₃CF₂CF₂O-), -85.44 (t, J = 13.41 Hz, 2F, -CF₂CF₂Ar), -113.85 (s, 2F, -CF₂CF₂Ar), -127.70 to -128.15 (m, 2nF, -(CF₂CF₂CF₂O)ₙ-), -128.68 (s, 2F, CF₃CF₂CF₂O-).

### (Example 17)

The reaction was carried out under the same conditions as in Example 1 except that 1-bromo-4-iodobenzene was used instead of iodobenzene, and a compound (16) was obtained with a yield of 28%.

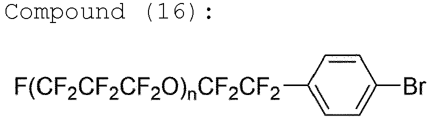

Results of NMR analysis on compound (16):
¹H NMR (D₂O): δ 7.27 (d, J = 8.52 Hz, 2H, Ar-H), 7.38 (d, J = 8.56 Hz, 2H, Ar-H);
¹⁹F NMR (D₂O, C₆F₆ ; δ -163): δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to - 82.80 (m, 2F, CF₃CF₂CF₂O-), -85.58 (t, J = 13.41 Hz, 2F, -CF₂CF₂Ar), -114.23 (d, J = 167.07 Hz, 2F, -CF₂CF₂Ar), -127.70 to -128.15 (m, 2nF, -(CF₂CF₂CF₂O)ₙ-), -128.68 (s, 2F, CF₃CF₂CF₂O-).

### (Example 18)

The reaction was carried out under the same conditions as in Example 1 except that ethyl 4-iodobenzoate was used instead of iodobenzene, and a compound (17) was obtained with a yield of 42%.

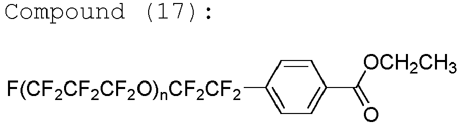

Results of NMR analysis on compound (17):
¹H NMR (D₂O): δ 7.47 (d, J = 8.36 Hz, 2H, Ar-H), 7.81 (d, J = 8.28 Hz, 2H, Ar-H);
¹⁹F NMR (D₂O, C₆F₆ ; δ -163): δ - 80.54 (t, J = 8.12 Hz, 3F, CF₃CF₂CF₂O-), -81.42 to -82.15 (m, 4nF, - (CF₂CF₂CF₂O)ₙ-), -82.78 (m, 2F, -CF₂CF₂CF₂OCF₂CF₂Ar), -114.05 (s, 2F, -CF₂CF₂-Ar), -127.41 to -128.13 (m, 2nF, -(CF₂CF₂CF₂O)ₙ-), -128.65 (s 2F, CF₃CF₂CF₂O-) .

### (Example 19)

The reaction was carried out under the same conditions as in Example 1 except that ethyl 3-iodobenzoate was used instead of iodobenzene, and a compound (18) was obtained with a yield of 27%.

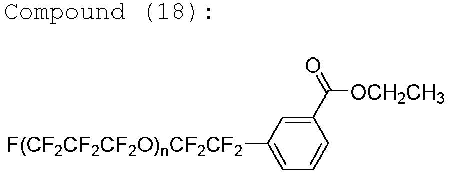

Results of NMR analysis on compound (18):
¹H NMR (D₂O) : δ 1.24 (t, J = 7.16 Hz, 3H, -Ar-COOCH₂CH₃), 4.12 (q, J =7.16 Hz, 2H, -Ar-COOCH₂CH₃), 7.40 (d, J = 7.80 Hz, Ar-H), 7.57 (d, J = 7.80 Hz, Ar-H), 7.84 (d, J = 7.80 Hz, Ar-H), 7.91 (s, Ar-H);
¹⁹F NMR (D₂O, C₆F₆ ; δ -163): δ -80.55 (t, J = 7.57 Hz, 3F, CF₃CF₂CF₂O-), -81.60 to -81.70 (m, 4nF, -(CF₂CF₂CF₂O)ₙ-), -82.70 (m, 2F, -CF₂CF₂CF₂OCF₂CF₂Ar), -82.70 to - 82.75 (m, 2F, CF₃CF₂CF₂O-), -85.54 (t, J = 13.41 Hz, 2F, -CF₂CF₂Ar), -113.96 (s, 2F, -CF₂CF₂Ar), -127.70 to -128.15 (m, 2nF, -(CF₂CF₂CF₂O)ₙ-), -128.68 (s, 2F, CF₃CF₂CF₂O-) .

### (Example 20)

The reaction was carried out under the same conditions as in Example 1 except that 3,5-dimethyliodobenzene was used instead of iodobenzene, and a compound (19) was obtained with a yield of 67%.

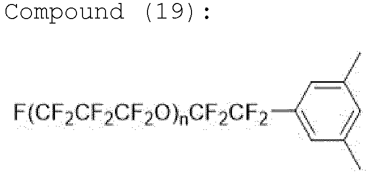

Results of NMR analysis on compound (19):
¹H NMR (D₂O) : δ 2.16 (s, 3H, -Ar-CH₃), 6.73 (s, Ar-H), 6.88 (d, J = 13.08 Hz, Ar-H);
¹⁹F NMR (D₂O, C₆F₆ ; δ -163): δ -80.57 (t, J = 7.57 Hz, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -113.96 (s, 2F, -CF₂CF₂Ar), -127.70 to -128.15 (m, 2nF, -(CF₂CF₂CF₂O)ₙ-), -128.68 (s, 2F, CF₃CF₂CF₂O-).

### (Example 21)

Under an argon atmosphere, 0.51 g of the compound (16) obtained in Example 17 (n = 29, weight average molecular weight (Mw) of 5,100) and 14 mg of nickel(II) chloride were added into a flask and stirred for 30 minutes, 332 mg of triethyl phosphite was then added thereto, and this reaction solution was stirred at 160°C for 16 hours and then cooled to room temperature. The obtained reaction solution was separated and volatiles were distilled off, thereby obtaining a compound (20).

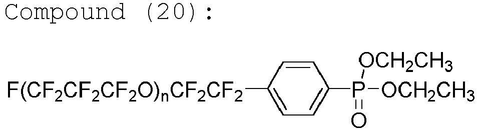

Results of NMR analysis on compound (20):
¹H NMR (D₂O) : δ 1.04 (s, 6H, -OCH₂CH₃), δ 3.62 (s, 4H, -OCH₂CH₃), δ 7.27 to 7.65 (m, 4H, Ar-H);
¹⁹F NMR (D₂O, C₆F₆; δ -163) : δ -80.57 (t, J = 7.57, 3F, CF₃CF₂CF₂O-), -81.10 to -81.70 (m, 4nF, -(CF₂CF₂CF₂O)ₙ-), -82.25 (m, 2F, -CF₂CF₂CF₂OCF₂CF₂Ar), -82.70 to -82.80 (m, 2F, CF₃CF₂CF₂O-), -85.67 (t, J = 13.41 Hz, 2F, -CF₂CF₂Ar), -114.54 (d, J = 163.46 Hz, 2F, -CF₂CF₂Ar), -127.70 to -128.15 (m, 2nF, -(CF₂CF₂CF₂O)ₙ-), -128.68 (s, 2F, CF₃CF₂CF₂O-)

### (Example 22)

Under an argon atmosphere, 0.51 g of F(CF₂CF₂CF₂O)ₙCF₂CF₂-I (n = 29, weight average molecular weight (Mw) of 5,100), 32 mg of metallic copper, 1.0 mL of dimethyl sulfoxide, and 65 µL of β-bromostyrene were introduced into a flask. This reaction solution was stirred at 150°C for 16 hours and then cooled to room temperature. The resulting reaction solution was passed through silica gel column chromatography. After separating the solution, volatiles were distilled off, and when analyzed using ¹⁹F NMR, a compound (21) was obtained with a yield of 20%.

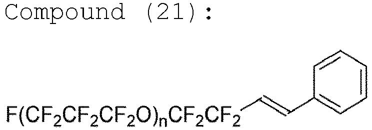

Results of NMR analysis on compound (21):
¹H NMR (D₂O): δ 5.93 (dt, J = 16.20, 11.65 Hz, 1H, ArCH=CH-CF₂ (trans)), 6.85 to 7.15 (m, 6H, Ar-CH=CH-CF₂, Ar-H);
¹⁹F NMR (D₂O, C₆F₆ ; δ -163): δ -80.59 (t, J = 7.57, 3F, CF₃CF₂CF₂O-), -81.74 to -81.99 (m, 4nF, -(CF₂CF₂CF₂O)ₙ-), -82.25 to -82.28 (m, 2F, -CF₂CF₂CF₂OCF₂CF₂-CH=CH-), -82.77 to -82.86 (m, 2F, CF₃CF₂CF₂O-), -83.88 to -83.97 (m, 2F, -CF₂CF₂-CH=CH-), -114.56 (d, J = 11.6 Hz, 1F, -CF₂CF₂-CH=CH-), -127.70 to -128.10 (m, 2nF, -(CF₂CF₂CF₂O)ₙ-), -128.74 (s, 2F, CF₃CF₂CF₂O-)

### (Example 23)

The reaction was carried out under the same conditions as in Example 1 except that CF₃O-(CF₂O)ₘ-(CF₂CF₂O)ₙCF₂-I (m = 25 and n = 27) was used instead of F(CF₂CF₂CF₂O)ₙCF₂CF₂-I, and a compound (22) was obtained with a yield of 12%.

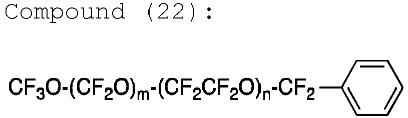

Results of NMR analysis on compound (22):
¹H NMR (D₂O): δ 7.22 to 7.36 (m, 5H, Ar-H);
¹⁹F NMR (D₂O, C₆F₆ ; δ -163) : δ -51.97 (m, 2mF, -(CF₂O)ₘ-), -53.70 (m, 2mF, -(CF₂O)ₘ-), -54.78 (m, 2mF, -(CF₂O)ₘ-), -56.44 (m, 3F, OCF₃), -87.25 (m, 2nF, -(CF₂CF₂O)ₙ-), -88.91 (m, 2nF, -(CF₂CF₂O)ₙ-), -127.61 (m, 2F, OCF₂Ar).

### Industrial Applicability

The fluoropolymer-containing compound produced by the method of the present disclosure may be used in applications where the heat resistance of an additive such as a surface-treating agent, or the durability against chemical substances is demanded.

## Claims

1. A method for producing a fluoropolyether group-containing compound, comprising reacting a fluoropolyether group-containing compound (A) represented by the following formula:
X¹¹-(R¹¹)ₙ₁₁-R^{F1}-X¹² (1)
with a compound (C) represented by any of the following formulae (c1) to (c4): 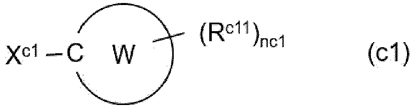 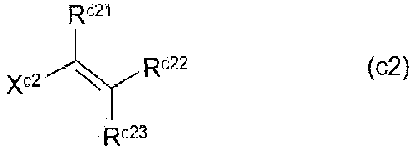 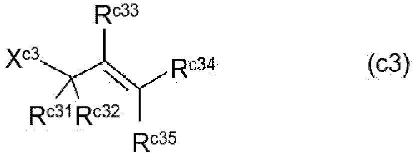
X^{c4}-R^{c41}-C≡C-R^{c42} (c4)
in the presence of a metal catalyst comprising at least one selected from Pd, Cu, Ni, Pt, and Ag,
wherein
X¹¹ and X¹² are each independently a halogen atom or a hydrogen atom, provided that at least one of X¹¹ and X¹² is a halogen atom;
R¹¹ is a C₁₋₁₆ alkylene group optionally substituted with one or more fluorine atoms;
n11 is 0 or 1;
R^{F1} is a group represented by the following formula:
-(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula; and
R^{Fa} is each independently at each occurrence a hydrogen atom, a fluorine atom, or a chlorine atom; wherein
W is each independently a structure having an aromatic ring;
X^{c1} is a hydrogen atom, a halogen atom, an alkylsilyl group, an alkoxysilyl group, a boron-containing leaving group, an alkylstannyl group, a copper atom, a copper carboxylate salt, or a zinc atom, bonded to a carbon atom, wherein the carbon atom is comprised in the ring of W;
R^{c11} is a substituent bonded to an atom constituting the ring of W, and is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, or a monovalent organic group;
nc1 is each independently an integer of 0 or more and less than the number of atoms consisting the ring of W;
X^{c2}, X^{c3}, and X^{c4} are each independently a hydrogen atom, a halogen atom, an alkylsilyl group, an alkoxysilyl group, a boron-containing leaving group, an alkylstannyl group, a copper atom, a copper carboxylate salt, or a zinc atom;
R^{c21}, R^{c22}, and R^{c23} are each independently a hydrogen atom, a halogen atom, a C₁₋₆ alkyl group, or a phenyl group;
R^{c31}, R^{c32}, R^{c33}, R^{c34}, and R^{c35} are each independently a hydrogen atom, a halogen atom, or a C₁₋₆ alkyl group;
R^{c41} is a single bond, a methylene group, or an ethylene group; and
R^{c42} is a hydrogen atom or a methyl group.

2. The method for producing a fluoropolyether group-containing compound according to claim 1, wherein the reaction of the fluoropolyether group-containing compound (A) with the compound (C) is carried out in a solvent.

3. The method for producing a fluoropolyether group-containing compound according to claim 2, wherein the solvent contains a fluorinated solvent.

4. The method for producing a fluoropolyether group-containing compound according to claim 2 or 3, wherein the solvent contains a non-fluorinated fluorine solvent.

5. The method for producing a fluoropolyether group-containing compound according to any one of claims 1 to 4, wherein the formula (1) is represented by the following formula (1a):
X¹¹(R¹¹)ₙ₁₁-R^{F1}-X¹² (1a)
where
X¹¹ is a fluorine atom, a chlorine atom, or a hydrogen atom;
X¹² is an iodine atom or a bromine atom;
n11 is 0 or 1; and
R¹¹ and R^{F1} are the same as defined in claim 1, or by the following formula (1b):
X¹¹-(R¹¹)ₙ₁₁R^{F1}-X¹² (1b)
where
X¹¹ and X¹² are each independently an iodine atom or a bromine atom;
R¹¹ is a C₁₋₆ alkylene group optionally substituted with one or more fluorine atoms;
n11 is 0 or 1; and
R^{F1} is the same as defined in claim 1.

6. The method for producing a fluoropolyether group-containing compound according to any one of claims 1 to 5, wherein R^{Fa} is a fluorine atom.

7. The method for producing a fluoropolyether group-containing compound according to any one of claims 1 to 6, wherein R^{F1} is each independently at each occurrence represented by the following formula (f1), (f2), (f3), (f4), or (f5):
-(OC₃F₆)_{d1}-(OC₂F₄)e1- (f1)
where d1 is an integer of 1 to 200, and e1 is 1,
-(OC₄F₈)_{c1}-(OC₃F₆)_{d1}-(OC₂F₄)ₑ₁-(OCF₂)_{f1}- (f2)
where c1 and d1 are each independently an integer of 0 or more and 30 or less, and e1 and f1 are each independently an integer of 1 or more and 200 or less;
the sum of c1, d1, e1, and f1 is 2 or more; and
the occurrence order of the respective repeating units enclosed in parentheses provided with a subscript c1, d1, e1, or f1 is not limited in the formula,
-(R⁶-R⁷)_{g1}- (f3)
where R⁶ is OCF₂ or OC₂F₄;
R⁷ is a group selected from OC₂F₄, OC₃F₆, OC₄F₈, OC₅F₁₀, and OC₆F₁₂, or a combination of two or three groups independently selected from these groups; and
g1 is an integer of 2 to 100,
-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f4)
where e1 is an integer of 1 or more and 200 or less, a1, b1, c1, d1, and f1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula, and
-(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- (f5)
where f1 is an integer of 1 or more and 200 or less, a1, b1, c1, d1, and e1 are each independently an integer of 0 or more and 200 or less, the sum of a1, b1, c1, d1, e1, and f1 is at least 1, and the occurrence order of the respective repeating units enclosed in parentheses provided with a1, b1, c1, d1, e1, or f1 is not limited in the formula.

8. The method for producing a fluoropolyether group-containing compound according to any one of claims 1 to 7, wherein R^{c11} is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, a C₁₋₂₀ alkyl group, a phenyl group, a C₁₋₂₀ alkoxy group, a group of -OR^{c10}, -NR^{c12}R^{c13}, -SR^{c14}, -COOR^{c15}, -COR^{c16}, -CR^{c17}=C(R^{c18})₂, -C(R^{c20})₂CR^{c17}=C(R^{c18})₂, -PO(OR^{c19})₂, -P(R^{c19'})₂O₂, or -O-P(=O)(OR^{c19"})₂;
R^{c10} is a monovalent organic group containing at least one O atom or S atom and containing 2 to 10 carbon atoms;
R^{c12} to R^{c13} are each independently a hydrogen atom or a C₁₋₂₀ alkyl group, provided that either one of them is a C₁₋₂₀ alkyl group;
R^{c14} is a C₁₋₂₀ alkyl group;
R^{c15} to R^{c18} and R^{c20} are each independently a hydrogen atom or a C₁₋₂₀ alkyl group;
R^{c19} is each independently a hydrogen atom or a C₁₋₂₀ alkyl group, provided that either one of R^{c19} is a C₁₋₂₀ alkyl group;
R^{c19'} is each independently a hydrogen atom or a C₁₋₂₀ alkyl group, provided that either one of R^{c19'} is a C₁₋₂₀ alkyl group; and
R^{c19"} is each independently a hydrogen atom or a C₁₋₂₀ alkyl group, provided that either one of R^{c19"} is a C₁₋₂₀ alkyl group.

9. A fluoropolyether group-containing compound represented by the following formula (b11), (b12), (b21), (b22), (b31), (b32), (b41), or (b42): 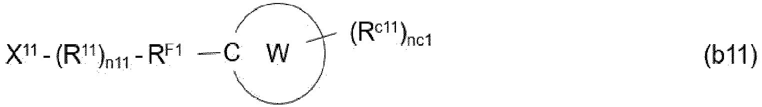 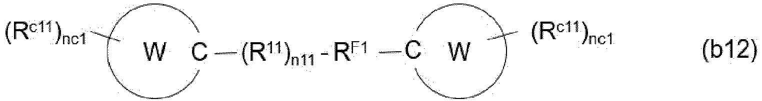 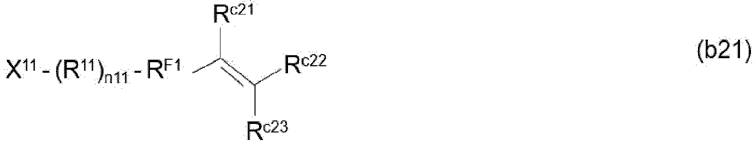 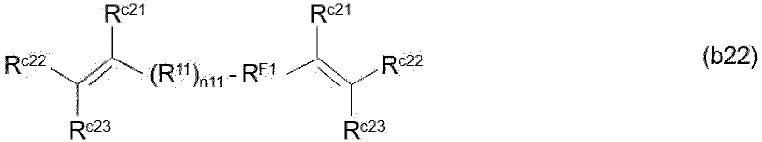 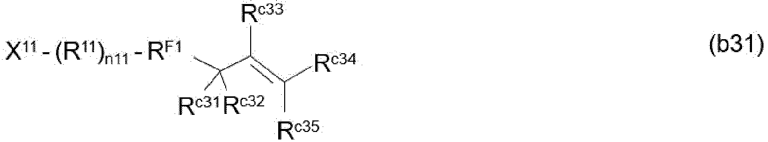 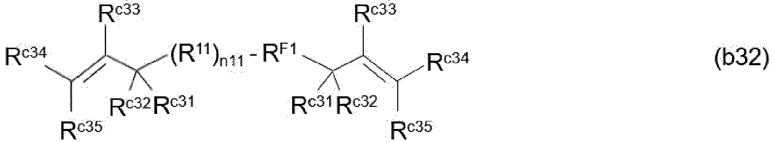
X¹¹-(R¹¹)ₙ₁₁-R^{F1} -R^{c41}-C≡C-R^{c42} (b41)
R^{c42}-C≡C-R^{c41}-(R¹¹)ₙ₁₁-R^{F1}-R^{c41}-C≡C-R^{c42} (b42)
wherein
X¹¹ is each independently a fluorine atom, a chlorine atom, or a hydrogen atom;
R¹¹ is each independently a C₁₋₁₆ alkylene group optionally substituted with one or more fluorine atoms;
n11 is each independently 0 or 1;
R^{F1} is each independently a group represented by the following formula:
-(OC₆F₁₂)ₐ₁-(OC₅F₁₀)_{b1}-(OC₄F₈)_{c1}-(OC₃R^{Fa}₆)_{d1}-(OC₂F₄)ₑ₁-(OCF₂)_{f1}-;
a1, b1, c1, d1, e1, and f1 are each independently an integer of 0 to 200, the sum of a1, b1, c1, d1, e1, and f1 is 1 or more, and the occurrence order of the respective repeating units enclosed in parentheses provided with a1, b1, c1, d1, e1, or f1 is not limited in the formula;
R^{Fa} is each independently at each occurrence a hydrogen atom, a fluorine atom, or a chlorine atom;
wherein
W is each independently a structure having an aromatic ring;
R^{c11} is a substituent bonded to an atom constituting the ring of W and is each independently a fluorine atom, a chlorine atom, a bromine atom, an iodine atom, -NO₂, -OH, -NH₂, -PO(OH)₂, -PH₂O₂, -O-P(=O)(OH)₂, -SH, -SOOH, -SeH, a C₁₋₂₀ alkyl group, a phenyl group, a C₁₋₂₀ alkoxy group, a group represented by -OR^{c10}, -NR^{c12}R^{c13}, -SR^{c14}, -COOR^{c15}, -COR^{c16}, -CR^{c17}=C(R^{c18})₂, -C(R^{c20})₂CR^{c17}=C(R^{c18})₂, -PO(OR^{c19})₂, -P(R^{c19'})₂O₂, or -O-P(=O)(OR^{c19"})₂;
R^{c10} is a monovalent organic group containing at least one heteroatom;
R^{c12} to R^{c13} are each independently a hydrogen atom or a C₁₋₂₀ alkyl group, provided that either one of them is a C₁₋₂₀ alkyl group;
R^{c14} is a C₁₋₂₀ alkyl group;
R^{c15} to R^{c18} and R^{c20} are each independently a hydrogen atom or a C₁₋₂₀ alkyl group;
R^{c19} is each independently a hydrogen atom or a C₁₋₂₀ alkyl group, provided that either one of R^{c19} is a C₁₋₂₀ alkyl group;
R^{c19'} is each independently a hydrogen atom or a C₁₋₂₀ alkyl group, provided that either one of R^{c19'} is a C₁₋₂₀ alkyl group;
R^{c19"} is each independently a hydrogen atom or a C₁₋₂₀ alkyl group, provided that either one of R^{c19"} is a C₁₋₂₀ alkyl group;
nc1 is each independently an integer of 0 or more and less than the number of atoms consisting the ring of W;
R^{c21}, R^{c22}, and R^{c23} are each independently a hydrogen atom, a halogen atom, a C₁₋₆ alkyl group, or a phenyl group;
R^{c31}, R^{c32}, R^{c33}, R^{c34}, and R^{c35} are each independently a hydrogen atom, a halogen atom, or a C₁₋₆ alkyl group;
R^{c41} is a single bond, a methylene group, or an ethylene group; and
R^{c42} is a hydrogen atom or a methyl group.

10. The fluoropolyether group-containing compound according to claim 9, wherein R^{F1} is represented by the following formula (f1):
-(OC₃F₆)_{d1}-(OC₂F₄)ₑ₁- (f1)
where d1 is an integer of 3 to 60, and e1 is 1.

11. The fluoropolyether group-containing compound according to claim 10, wherein OC₃F₆ is linear.
